# EUROPÄISCHE PATENTSCHRIFT

(11) **EP 3 587 839 B1**
(45) Veröffentlichungstag und Bekanntmachung des Hinweises auf die Patenterteilung: **14.10.2020**
(21) Anmeldenummer: 19175194.0
(22) Anmeldetag: 17.05.2019
(51) Int. Cl.: F16B 13/06

(54) **ZWEI-KOMPONENTEN-DÜBEL MIT GLEITHINDERND VERZAHNTEN SPREIZSTEGEN**
TWO-COMPONENT DOWEL WITH TOOTHED EXPANDING BARS PREVENTING SLIPPAGE
GOUJON À DEUX COMPOSANTS POURVU DE BRIDES EXPANSIBLES DENTÉES RENDANT IMPOSSIBLE LE GLISSEMENT

(30) Priorität: 29.06.2018 DE 102018115861; 29.06.2018 DE 102018115862; 25.01.2019 DE 202019100436 U; 25.01.2019 DE 202019100448 U
(43) Veröffentlichungstag der Anmeldung: 01.01.2020
(73) Patentinhaber: Adolf Würth GmbH & Co. KG, 74653 Künzelsau (DE); Würth International AG, 7000 Chur (CH)
(72) Erfinder: Wieland, Achim, 74211 Leingarten (DE)
(74) Vertreter: Dilg, Haeusler, Schindelmann Patentanwaltsgesellschaft mbH

(56) Entgegenhaltungen:
- EP-A1- 1 701 046
- EP-A1- 2 533 962

## Beschreibung

Die Erfindung betrifft einen Dübel, ein Montagekit, eine Montageanordnung und ein Verfahren zum Montieren eines Dübels.

Ein Dübel ist ein in der Verbindungstechnik gebrauchtes Bauteil. Er wird bei Werkstoffen angewendet, in die sich eine Schraube nicht unmittelbar eindrehen lässt. Dübel werden in ein zylindrisches Loch in gemauerte, betonierte oder mit Platten versehene Wände, Decken oder Böden als Zwischenteil eingesetzt. Beim Eindrehen der Schraube spreizt sich der Dübel. Durch Kraftschluss zwischen Dübel und umgebendem Material und manchmal mit Formschluss ist die Schraube gegen Herausziehen gesichert.

EP 2533962 B1 offenbart einen Spreizdübel aus Kunststoff, mit einem Spreizbereich, der durch ein Spreizelement aufspreizbar ist, wobei das Spreizelement zum Aufspreizen in einen axialen Führungskanal des Spreizdübels einführbar ist, mit einer ersten Spreizhülse und mit einer zweiten Spreizhülse, die die erste Spreizhülse in einem unverspreizten Zustand zumindest teilweise umhüllt, wobei die erste Spreizhülse und die zweite Spreizhülse im unverspreizten Zustand dreh- und zugfest miteinander verbunden sind, wobei im Spreizbereich eine Gleitfläche zwischen der ersten Spreizhülse und der zweiten Spreizhülse ausgebildet ist, derart dass sich beim Verspreizen des Spreizdübels die erste Spreizhülse im Spreizbereich von der zweiten Spreizhülse lösen kann und relativ zur zweiten Spreizhülse bewegbar ist, wobei die erste Spreizhülse durch das Spreizelement selbst aufspreizbar ist, und wobei die erste Spreizhülse in ihrer Umfangsfläche eine Durchbrechung aufweist, die ein Spreizen der ersten Spreizhülse in radialer Richtung erleichtert.

EP 2813340 B1 offenbart einen Spreizdübel aus Kunststoff, mit einem Spreizbereich, der durch ein Spreizelement aufspreizbar ist, wobei das Spreizelement zum Aufspreizen in einen axialen Führungskanal des Spreizdübels einführbar ist, mit einer ersten Spreizhülse und mit einer zweiten Spreizhülse, die die erste Spreizhülse in einem unverspreizten Zustand zumindest teilweise umhüllt, wobei die erste Spreizhülse und die zweite Spreizhülse im unverspreizten Zustand dreh- und zugfest miteinander verbunden sind, wobei im Spreizbereich eine Gleitfläche zwischen der ersten Spreizhülse und der zweiten Spreizhülse ausgebildet ist, derart dass sich beim Verspreizen des Spreizdübels die erste Spreizhülse im Spreizbereich von der zweiten Spreizhülse lösen kann und relativ zur zweiten Spreizhülse bewegbar ist, und wobei an beiden Spreizhülsen sekundäre Spreizzungen ausgebildet sind, die gemeinsam im Spreizbereich angeordnet sind.

Nachteilig an den aus EP 2533962 B1 und EP 2813340 B1 bekannten Dübeln ist, dass aufgrund des Ausbildens einer Gleitfläche zwischen den beiden Spreizhülsen im Spreizbereich kein sauberer bzw. definierter Setzvorgang des Dübels ermöglicht ist. Wenn zum Beispiel der Dübel beim Setzen leicht schräg und zum Beispiel mittels eines Hammerschlags in ein Bohrloch eingeführt wird, kann es insbesondere im Bereich der Gleitfläche unter ungünstigen Umständen zu einem Abknicken des Dübels oder zu einem Verschieben der Spreizhülsen relativ zueinander kommen. Dadurch wird das Setzen des Dübels erschwert oder sogar der Dübel beschädigt oder gar zerstört.

Es ist eine Aufgabe der vorliegenden Erfindung, einen Dübel bereitzustellen, bei dem ein einfaches und fehlerrobustes Setzen des Dübels ohne Beschädigungsgefahr ermöglicht ist.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Ausführungsbeispiel der vorliegenden Erfindung ist ein Dübel geschaffen, der einen Fuß mit einer Öffnung zum Einführen eines Befestigungselements (insbesondere einer Schraube oder eines Bolzens), einen Kopf (gegenüberliegend dem Fuß) und einen Spreizbereich zwischen dem Fuß und dem Kopf mit einer Mehrzahl von in Umfangsrichtung alternierend und überlappungsfrei angeordneten und in Axialrichtung zwischen Fuß und Kopf verlaufenden ersten Spreizstegen und zweiten Spreizstegen (insbesondere langgestreckte Körper oder Materialabschnitte, die bei Einführen eines Befestigungselements in die Öffnung des Dübels (insbesondere wenn der Dübel in ein Bohrloch in einem Untergrund eingeführt ist, der ein Hohlkörper sein kann) eine seitliche Spreizbewegung vollführen können) aufweist, wobei die ersten Spreizstege Teil einer ersten Spritzgusskomponente des Dübels sind und die zweiten Spreizstege Teil einer zweiten Spritzgusskomponente (welche am Kopf und/oder am Fuß abschnittsweise auf die erste Spritzgusskomponente aufgespritzt sein kann) des Dübels sind, wobei die ersten Spreizstege und die zweiten Spreizstege jeweils in Axialrichtung des Dübels alternierend breitere Abschnitte und schmälere Abschnitte aufweisen, die miteinander zum mechanischen Verunmöglichen eines axialen Gleitens zwischen den ersten Spreizstegen und den zweiten Spreizstegen verzahnt sind, und wobei der Spreizbereich zwischen dem Fuß und dem Kopf so ausgebildet ist, dass bei Einführen eines Befestigungselements in die Öffnung zunächst ein gleitfreies radiales Aufspreizen der ersten Spreizstege und unabhängig davon der zweiten Spreizstege erfolgt und erst danach die radial aufgespreizten und dadurch voneinander beabstandeten ersten Spreizstege und zweiten Spreizstege miteinander verknoten.

Gemäß einem anderen Ausführungsbeispiel der vorliegenden Erfindung ist ein Verfahren zum Montieren eines Dübels mit den oben beschriebenen Merkmalen in einem als Hohlkörper ausgebildeten Untergrund (genauer gesagt in einer Aufnahmeöffnung eines Untergrunds, zum Beispiel ein Bohrloch) bereitgestellt, wobei das Verfahren ein Einführen des Dübels in ein Bohrloch in dem Untergrund, und ein Einführen eines Befestigungselements in die Öffnung des Dübels derart aufweist, dass zunächst ein gleitfreies radiales Aufspreizen (insbesondere ein rein radial nach außen gerichtetes Aufspreizen) der ersten Spreizstege und unabhängig davon der zweiten Spreizstege erfolgt, und nachfolgend ein Fortsetzen des Einführens des Befestigungselements in die Öffnung derart erfolgt, dass erst nach dem gleitfreien radialen Aufspreizen die radial aufgespreizten und dadurch voneinander beabstandeten ersten Spreizstege und zweiten Spreizstege miteinander verknotet werden (insbesondere durch ein gegenseitiges Umschlingen unterschiedlicher Spreizstege unter Bildung eines das Befestigungselement zumindest teilumfänglich umgreifenden Knotens oder Knäuels der Spreizstege, die aber immer noch am Kopf verbunden sein können).

Gemäß noch einem anderen Ausführungsbeispiel der vorliegenden Erfindung ist ein Montagekit geschaffen, das einen Dübel mit den oben beschriebenen Merkmalen und ein Befestigungselement (insbesondere eine Schraube oder einen Bolzen) zum Einführen in den Dübel aufweist.

Gemäß noch einem anderen Ausführungsbeispiel der vorliegenden Erfindung ist eine Montageanordnung bereitgestellt, die ein Montagekit mit den oben beschriebenen Merkmalen und einen Untergrund aufweist, wobei der Dübel in den Untergrund eingeführt ist und das Befestigungselement in den Dübel eingeführt ist.

Im Rahmen dieser Anmeldung können unter "einer ersten Spritzgusskomponente und einer zweiten Spritzgusskomponente" insbesondere zwei sich hinsichtlich einer Materialeigenschaft unterscheidende Bestandteile oder zwei materialgleiche oder materialverschiedene Bestandteile verstanden werden, die an einer oder mehreren Materialschnittstellen aneinander angrenzen oder dort miteinander verbunden sein können oder nicht verbunden sein können. Hierbei sind die beiden Komponenten zwei Spritzgusskomponenten, die in unterschiedlichen Spritzgussprozeduren hergestellt werden. Insbesondere kann die zweite Spritzgusskomponente im Bereich des Kopfes und/oder des Fußes auf die erste Spritzgusskomponente auf- bzw. übergespritzt sein. Dies kann insbesondere derart erfolgen, dass die zweite Spritzgusskomponente die erste Spritzgusskomponente abschnittsweise bedeckt (zum Beispiel in Bereich des Kopfs und/oder des Fußes), und in einem anderen Abschnitt (zum Beispiel im Spreizbereich) die zweite Spritzgusskomponente nur in Leer- bzw. Zwischenräumen zwischen Materialbereichen der ersten Spritzgusskomponente gebildet ist.

Im Rahmen dieser Anmeldung kann unter dem Begriff "Untergrund" insbesondere ein zum Verankern des Dübels und des Befestigungselements geeigneter Körper verstanden werden. Ein solcher Untergrund oder Verankerungsgrund kann insbesondere eine Wand, weiter insbesondere eine vertikale Wand, sein. Materialien für einen solchen Untergrund sind insbesondere Holz oder Holzbaustoffe, oder aber auch Beton- und Mauerwerksbaustoffe, Metall, Gipskarton oder Kunststoffbauteile. Ferner kann ein solcher Untergrund auch ein beliebiger Kompositwerkstoff aus mehreren unterschiedlichen Materialkomponenten sein. Insbesondere kann solcher Untergrund ein Vollkörper oder ein Hohlkörper sein.

Im Rahmen dieser Anmeldung kann unter dem Begriff "Vollkörper" insbesondere ein Untergrund verstanden werden, der - von einer Aufnahmeöffnung (zum Beispiel ein Bohrloch) zum Aufnehmen des Dübels abgesehen - von Hohlkammern frei oder im Wesentlichen frei ist. Hohlkammern in diesem Sinne können insbesondere materialfreie Bereiche (oder Bereiche sehr geringer Dichte, zum Beispiel Ausschäumungen) im Inneren des Untergrunds sein.

Im Rahmen dieser Anmeldung kann unter dem Begriff "Hohlkörper" insbesondere ein Untergrund verstanden werden, der im Inneren (insbesondere in einem Eindringbereich des Dübels und des Befestigungselements in den Untergrund) - zusätzlich zu einer Aufnahmeöffnung (zum Beispiel ein Bohrloch) zum Aufnehmen des Dübels - eine oder mehrere Hohlkammern, das heißt materialfreie Bereiche, aufweist. Ein solcher Hohlkörper kann eine reguläre Anordnung von Hohlkammern enthalten, beispielsweise gezielt vorgesehene Löcher in einem Ziegel. Auch ein poröser Körper kann als Hohlkörper angesehen werden. Konkrete Beispiele für Hohlkörper sind Hochlochziegelsteine oder poriger Leichtbeton. Auch eine Platte (zum Beispiel eine Gipsplatte), hinter der ein Hohlraum angeordnet ist, kann einen solchen Hohlkörper bilden. Gemäß einen exemplarischen Ausführungsbeispiel der Erfindung soll der Hohlkörper mindestens eine Kammer aufweisen, in der sich der Dübel verknoten kann.

Gemäß einem exemplarischen Ausführungsbeispiel der Erfindung ist ein Dübel geschaffen, bei dem bei Einführen eines Befestigungselements (insbesondere bei Eindrehen einer Schraube) in den Dübel sich die ersten bzw. zweiten Spreizstege zunächst unabhängig voneinander radial aufspreizen bzw. aufweiten. Erst wenn das zum Beispiel als Schraube ausgebildete Befestigungselement den Kopf erreicht und sich das Befestigungselement in den Kopf eindreht, wird der Kopf drehend in Richtung Fuß gezogen. Dadurch verdrehen sich auch die Spreizstege, vorzugsweise ohne abzureißen, und bilden daher um das Befestigungselement herum einen Knoten, der auch in einem als Hohlkörper ausgebildeten Untergrund ein Herausziehen des Dübels aus dem Bohrloch aufgrund eines entstehenden Formschlusses unterbindet. Aufgrund der umfänglich aneinander angrenzenden ersten und zweiten Spreizstege von ersten und zweiten Spritzgusskomponenten des Dübels kann jeder der Spreizstege jeweils unabhängig von anderen Spreizstegen bei Einführen eines Befestigungselements in die Öffnung des Dübels aufspreizen und dadurch zu einer festen Verankerung des Dübels in einem Bohrloch oder dergleichen in dem Untergrund beitragen. Auf diese Weise sind eine besonders sichere Verankerung des Dübels in einem Aufnahmeloch des Untergrunds und eine hohe Auszugskraft sichergestellt.

Besonders vorteilhaft ist, dass die Verzahnung der alternierend breiteren und schmäleren Abschnitte der ersten und zweiten Spreizstege in axialer Richtung ein Gleiten der ersten und zweiten Spreizstege und daher der ersten Spritzgusskomponente und der zweiten Spritzgusskomponente aneinander mechanisch verunmöglicht. Ein Gleiten von Dübelkomponenten kann dadurch mit Vorteil unterbunden werden. Durch das Unterbinden eines Gleitens im Spreizbereich kann im Unterschied zu den oben beschriebenen herkömmlichen Ansätzen ein sauberer und definierter Setzvorgang des Dübels ermöglicht werden. Selbst wenn der Dübel beim Setzen leicht schräg mit einer Setzkraft beaufschlagt und in ein Bohrloch eingeführt wird, ist ein einfaches und zerstörungsfreies Setzen des Dübels ermöglicht. Die axiale Verzahnung im Spreizbereich hemmt nämlich ein unerwünschtes Abknicken des Dübels, da sie jedes Gleiten der überlappungsfreien Spreizstege aneinander im Spreizbereich wirksam ausschließt.

Insbesondere kann der beschriebene Dübel mit Vorteil sowohl in einem Vollkörperuntergrund (zum Beispiel Vollbeton) als auch in einem Hohlkörperuntergrund (zum Beispiel an einer Holz- oder Gipsplatte mit einem Hohlraum dahinter) mit hohen Auszugskräften montiert werden. Im Falle eines Vollkörpers als Untergrund können sich die Spreizstege insbesondere im Wesentlichen vollumfänglich gegen ein Aufnahmeloch in einem solchen Untergrund verspreizen und dadurch für eine sichere Verankerung des Dübels in dem Untergrund sorgen. Wird hingegen der Dübel an einem Hohlkörper als Untergrund montiert, können sich die in Umfangsrichtung alternierend und in axialer Richtung verzahnt sowie überlappungsfrei vorgesehenen Spreizstege bei Einführen des Dübels in ein Durchgangsloch des Untergrunds mit dahinterliegendem Hohlraum und bei nachfolgendem (insbesondere drehenden) Einführen eines Befestigungselements in die Öffnung des Dübels in dem Hohlraum verknoten. Dabei können sich die Spreizstege sowohl um das Befestigungselement herumlegen als auch sich in dem Hohlraum an Material des Untergrunds (zum Beispiel an einer Rückfläche einer Platte) anlegen. Anschaulich können sich die Spreizstege beim Eindrehen einer Schraube als Befestigungselement in den Dübel alle in die gleiche Richtung drehen und sich daher zum Beispiel hinter einer Deckplatte des Hohlraum aufweisenden Untergrunds verdrillen oder aufwickeln. Auf diese Weise ist ein für verschiedenste Untergründe universal einsetzbarer Dübel mit starker Verankerungskraft und hohen Auszugswerten geschaffen.

Im Weiteren werden zusätzliche Ausführungsbeispiele des Dübels, des Montagekits, der Montageanordnung und des Verfahrens beschrieben.

Gemäß einem Ausführungsbeispiel können die miteinander verzahnten breiteren Abschnitte der ersten und zweiten Spreizstege aneinander anliegende Kanten aufweisen, die senkrecht oder im Wesentlichen senkrecht (zum Beispiel mit abgerundeten Ecken) zu einer Axialrichtung des Dübels angeordnet sind. Das Ausbilden solcher, zu einer Axialrichtung des Dübels senkrechter Flächen bewirkt ein gleitfreies, zunächst rein radiales Aufspreizen der vorzugsweise im Bereich von Kopf und Fuß miteinander verbundenen ersten und zweiten Spreizstege, wenn ein in die Öffnung des Dübels eingeführtes Befestigungselement sich noch nicht in den Kopf eingedreht hat. Das Vorsehen solcher 90°-Elemente verbietet also ein Gleiten zwischen den Spreizstegen, insbesondere während der Dübel radial geweitet wird. Die Spreizstege lösen sich voneinander und werden erst dann unter Bildung eines gemeinsamen Knotens verdreht.

Gemäß einem Ausführungsbeispiel können die alternierenden breiteren Abschnitte und schmäleren Abschnitte der ersten Spreizstege und der zweiten Spreizstege im Wesentlichen rechteckförmige Zahnstrukturen bilden. Diese Reibung erhöhende und axialverschiebungsverhindernde Ausgestaltung der Spreizstege schließt ein Gleiten der Spreizstege aneinander aus.

Gemäß einem Ausführungsbeispiel können die alternierenden breiteren Abschnitte und schmäleren Abschnitte der ersten Spreizstege und der zweiten Spreizstege miteinander einen Formschluss bilden. Anschaulich können die Spreizstege durch die alternierend breiteren und schmäleren Abschnitte miteinander nach dem Schlüssel-Schloss-Prinzip verhaken und somit einen wirksamen Gleitschutz bereitstellen.

Gemäß einem Ausführungsbeispiel kann in dem Spreizbereich kein Material der ersten Spreizstege und der zweiten Spreizstege in Radialrichtung übereinander liegen. Auf diese Weise kann eine mantelseitige Berührfläche zwischen den ersten Spreizstegen und den zweiten Spreizstegen vermieden werden. Anschaulich liegen die Spreizstege gemäß dieser Ausgestaltung gemeinsam auf einer im Wesentlichen geschlossenen Mantelfläche, ohne in Radialrichtung miteinander zu überlappen. Somit grenzen die ersten und zweiten Spreizstege ausschließlich entlang einer zum Beispiel gezackten oder gestuften Linie aneinander an, die durch die alternierend breiteren und schmäleren Abschnitte definiert ist.

Gemäß einem Ausführungsbeispiel können die ersten Spreizstege und die zweiten Spreizstege so ausgebildet und relativ zueinander derart angeordnet sein, dass bei Einführen eines Befestigungselements in die Öffnung ein Gleiten zwischen den ersten Spreizstegen und den zweiten Spreizstegen mechanisch verunmöglicht ist. Stattdessen weiten sich die ersten und zweiten Spreizstege in der ersten Phase des Einführens des Befestigungselements in die Öffnung des Dübels unabhängig voneinander radial auf, ohne aneinander zu gleiten.

Gemäß einem Ausführungsbeispiel können die ersten Spreizstege im Bereich des Kopfs und/oder im Bereich des Fußes durch Material der ersten Spritzgusskomponente miteinander einstückig verbunden sein, insbesondere mittels einer jeweiligen Ringstruktur im Kopf- und/oder Fußbereich des Dübels. Alternativ oder ergänzend können die zweiten Spreizstege im Bereich des Kopfs und/oder im Bereich des Fußes durch Material der zweiten Spritzgusskomponente miteinander einstückig verbunden sein, insbesondere mittels einer jeweiligen Ringstruktur im Kopf- und/oder Fußbereich des Dübels. Das Ausbilden solcher Ringstrukturen unterbindet eine unerwünschte Relativbewegung zwischen den Konstituenten des Dübels. Durch das Verbinden der Gruppe der ersten Spreizstege miteinander bzw. der Gruppe der zweiten Spreizstege miteinander - vorzugsweise am Kopf und am Fuß - kann ein mechanisch besonders stabiler Dübel geschaffen werden, der auch im aufgespreizten Zustand mechanisch intakt bleibt. Die gruppenweise Verbindung der ersten Spreizstege bzw. der zweiten Spreizstege am Kopf bzw. Fuß des Dübels kann zum Beispiel stoffschlüssig erfolgen, indem die genannten Strukturen integral ausgebildet werden, und zwar mittels Spritzgießens. Durch die gruppenweise Verbindung der Spreizstege am Kopf kann ein Abreißen der Spreizstege vom Kopf beim Verknoten vermieden werden und somit ein definiertes Knäuel gebildet werden.

Gemäß einem Ausführungsbeispiel kann im Bereich des Kopfs und/oder im Bereich des Fußes Material der ersten Spritzgusskomponente und der zweiten Spritzgusskomponente miteinander formschlüssig verbunden sein, insbesondere mittels mindestens eines Überstands der ersten Spritzgusskomponente in Eingriff mit mindestens einer Aussparung der zweiten Spritzgusskomponente. Durch diese Materialverbindung kann eine unerwünschte Relativbewegung zwischen den Spritzgusskomponenten in diesem Bereich verhindert werden.

Gemäß einem Ausführungsbeispiel kann der Spreizbereich zwischen dem Fuß und dem Kopf so ausgebildet sein, dass bei dem Einführen eines Befestigungselements in die Öffnung zunächst ein ausschließlich radiales Aufweiten der ersten und zweiten Spreizstege ohne axiale Relativbewegung der ersten und zweiten Spreizstege zueinander erfolgt. Diese axiale Relativbewegung wird durch das formschlüssige Eingreifen der schmäleren und breiteren Abschnitte der ersten und zweiten Spreizstege unterbunden.

Gemäß einem Ausführungsbeispiel kann der Spreizbereich zwischen dem Fuß und dem Kopf so ausgebildet sein, dass ein Übergang zwischen dem gleitfreien radialen Aufweiten und dem Beginn des Verknotens erfolgt, wenn eine Aufweitung der ersten und zweiten Spreizstege in einem Bereich zwischen 15 % und 25 % eines Umfangs des Spreizbereichs erfolgt ist. Anders ausgedrückt kann ein Verhältnis des durch die ersten und zweiten Spreizstege definierten Außenumfangs des Spreizbereichs unmittelbar bei Beginn des Verknotens (d.h. wenn das Befestigungselement in Dübelmaterial des Kopfs eindringt) im Vergleich zu einem Zustand vor Einführen eines Befestigungselements in den Dübel in einem Bereich zwischen 1,15 und 1,25 liegen. Somit kann aufgrund der Materialwahl, Dimensionierung und Formgebung der ersten und zweiten Spreizstege definiert werden, wie weit die Spreizstege aufgeweitet sein sollen, um einen Beginn des Verknotens der Spreizstege zuzulassen. Anschaulich erfolgt eine Verknoten erst, wenn die ersten und die zweiten Spreizstege nicht mehr über die alternierend breiteren und schmäleren Abschnitte in Verzahnungseingriff miteinander stehen.

Gemäß einem Ausführungsbeispiel kann eine Axialverschiebung zwischen der ersten Spritzgusskomponente und der zweiten Spritzgusskomponente mechanisch verunmöglicht sein. Dies kann zum Beispiel durch eine formschlüssige Verbindung der beiden Spritzgusskomponenten im Bereich von Fuß und/oder Kopf des Dübels bewerkstelligt werden.

Gemäß einem Ausführungsbeispiel können eine tangentiale Länge der schmäleren Abschnitte der ersten Spreizstege und/oder der zweiten Spreizstege geringer sein als eine radiale Dicke der ersten Spreizstege und/oder der zweiten Spreizstege. Anschaulich können die Spreizstege als dünne streifenförmige Körper ausgebildet werden, die eine gute Biegefähigkeit und gleichzeitig eine ausreichende Steifigkeit in Längsrichtung zeigen.

Gemäß einem Ausführungsbeispiel kann die erste Spritzgusskomponente im Spreizbereich eine umfängliche Gitterstruktur mit einer Mehrzahl von Durchgangsschlitzen zwischen benachbarten ersten Spreizstegen haben, wobei insbesondere die Durchgangsschlitze nur durch Punktkontakte zum Verbinden benachbarter erster Spreizstege unterbrochen sein können. Somit kann die erste Spritzgusskomponente im Spreizbereich als offene Käfigstruktur ausgebildet sein, deren Gitterstreben in Form der ersten Spreizstege im Spreizbereich allenfalls mittels punktförmiger Kontaktstellen miteinander verbunden sind.

Gemäß einem Ausführungsbeispiel kann die zweite Spritzgusskomponente im Spreizbereich eine umfängliche Gitterstruktur mit einer Mehrzahl von, insbesondere ununterbrochenen, Durchgangsschlitzen zwischen benachbarten zweiten Spreizstegen haben. Daher kann auch die zweite Spritzgusskomponente im Spreizbereich als offene Käfigstruktur ausgebildet sein, die zu der Käfigstruktur der ersten Spritzgusskomponente invers oder zumindest im Wesentlichen invers ausgebildet ist. Unter invers wird hierbei verstanden, dass die Käfigstruktur der ersten Spritzgusskomponente an solchen Stellen Material aufweist, wo die Käfigstruktur der zweiten Spritzgusskomponente materialfrei ist, und dass die Käfigstruktur der ersten Spritzgusskomponente an solchen Stellen materialfrei ist, wo die Käfigstruktur der zweiten Spritzgusskomponente Material aufweist.

Gemäß einem Ausführungsbeispiel kann jeder der ersten Spreizstege und jeder der zweiten Spreizstege unabhängig von den verbleibenden Spreizstegen bewegbar sein. Durch ein separat bewegbares Vorsehen jedes Spreizschenkels kann bewirkt werden, dass eine Bewegung dieses Spreizschenkels keine Mitbewegung der anderen Spreizschenkel auslöst.

Gemäß einem Ausführungsbeispiel können die ersten Spreizstege und die zweiten Spreizstege gemeinsam eine im Umfangsrichtung im Wesentlichen geschlossene Struktur bilden. Indem der Dübel durch die Spreizstege im Spreizbereich umfänglich unter Bildung einer im Wesentlichen durchgängigen Mantelfläche geschlossen ist, kann der ganze oder annähernd der ganze Umfang für eine Verankerung in einem Untergrund genutzt werden und dadurch eine hohe Haltekraft erreicht werden.

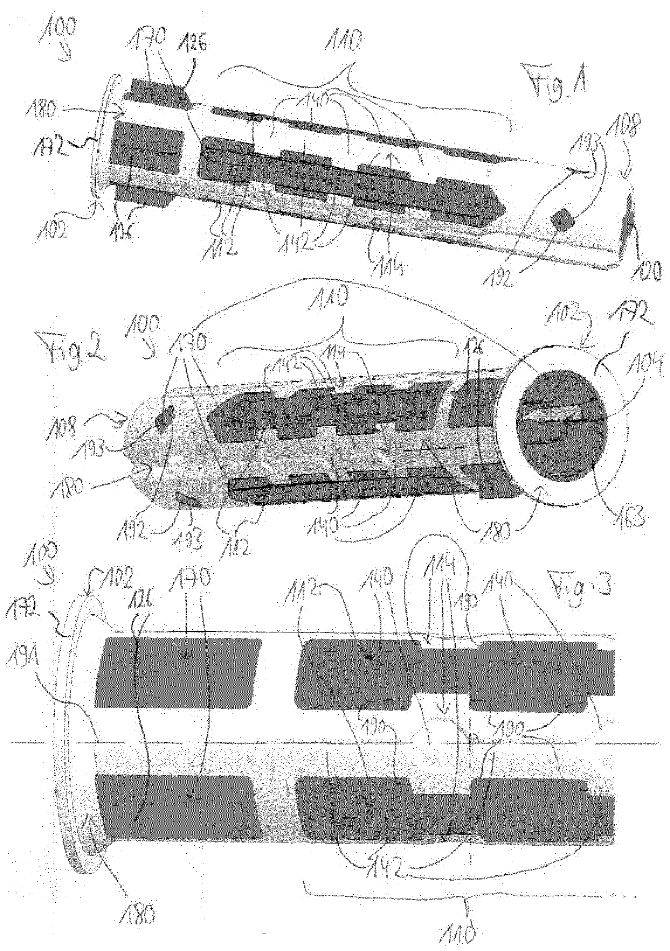

Gemäß einem Ausführungsbeispiel können in der Axialrichtung Ränder der alternierend breiteren Abschnitte und schmäleren Abschnitte der ersten Spreizstege und der zweiten Spreizstege sich zumindest abschnittsweise im Wesentlichen entlang einer periodischen Rechteckfunktion erstrecken. Anschaulich können also die Spreizstege im Spreizbereich die Form einer ondulierenden oder sich wiederholenden Abfolge von Rechtecken aufweisen, wie in Figur 1 und Figur 3 gut erkennbar ist.

Gemäß einem Ausführungsbeispiel kann ein Außendurchmesser des Befestigungselements größer als ein Innendurchmesser des Dübels sein. Der Durchmesser des Befestigungselements kann ein Kerndurchmesser und/oder ein Außendurchmesser eines als Schraube ausgebildeten Befestigungselements sein. Unter einem Kerndurchmesser einer Schraube kann der Durchmesser eines Schraubenschafts ohne Hinzurechnung der auf dem Schraubenschaft ausgebildeten Gewindegänge verstanden werden oder kann der kleinste Durchmesser der Gewindegeometrie verstanden werden. Unter einem Außendurchmesser einer Schraube kann der Durchmesser der Schraube an der radialen Außenseite der Gewindegänge verstanden werden oder kann der größte Durchmesser der Gewindegeometrie verstanden werden. Wenn das Befestigungselement als gewindefreier Bolzen ausgebildet ist, kann der Durchmesser ein Bolzendurchmesser sein. Anschaulich kann mit Vorteil zum Beispiel ein Schraubendurchmesser größer als ein Kerndurchmesser des Dübels sein, um bei Einführen der Schraube in die Öffnung des Dübels ein radiales Spreizen zu bewirken.

Gemäß einem Ausführungsbeispiel können bei der Montageanordnung die Spreizstege des Dübels vollumfänglich aufgespreizt sein und der Untergrund ein Vollkörper sein. Alternativ können bei einer Montageanordnung die Spreizstege des Dübels in einem Hohlraum des als Hohlkörper ausgebildeten Untergrunds verknotet sein.

Gemäß einem Ausführungsbeispiel kann das Verfahren ein Verknoten der ersten und zweiten Spreizstege miteinander aufweisen, ohne dass die ersten und zweiten Spreizstege vom Kopf abgetrennt werden. Bei Ausbilden einer Verbindung der ersten Spreizstege miteinander am Dübelkopf können sich die ersten Spreizstege bei drehendem Einführen eines Befestigungselements in den Kopf des Dübels mit dem mitdrehenden Kopf mitdrehen, ohne dass die ersten Spreizstege vom Kopf abreißen. In entsprechender Weise können bei Ausbilden einer Verbindung der zweiten Spreizstege miteinander am Dübelkopf sich die zweiten Spreizstege bei drehendem Einführen des Befestigungselements in den Kopf des Dübels mit dem mitdrehenden Kopf und mit den ersten Spreizstegen mitdrehen, ohne dass die zweiten Spreizstege vom Kopf abreißen. Infolgedessen kommt es zu einer Verdrehung oder Verdrillung der ersten und zweiten Spreizstege unter Ausbildung eines Knotens oder Knäuels in einem Hohlraum des Untergrunds, ohne dass die Spreizstege vom Kopf des Dübels abreißen. Dadurch ist ein definiertes Setzen des Dübels ermöglicht und eine hohe Haltekraft erreichbar.

Gemäß einem Ausführungsbeispiel kann das Verfahren ein Verknoten der ersten und zweiten Spreizstege miteinander aufweisen, wenn das Befestigungselement drehend in den Kopf eindringt und dadurch den Kopf drehend in Richtung Fuß zieht. Insbesondere kann der Fuß des Dübels ausgestaltet sein, nicht mitzudrehen, wenn das Befestigungselement in den Kopf eingedrungen ist. Dies kann zum Beispiel durch das Ausbilden einer Mitdrehsicherung an einer radialen Außenseite des Dübelsfußes bewirkt werden.

Gemäß einem Ausführungsbeispiel ist es möglich, dass die ersten Spreizstege nicht mit den zweiten Spreizstegen verbunden sind. Anders ausgedrückt können die ersten Spreizstege im Verhältnis zu den zweiten Spreizstegen unverbunden sein. Dies ermöglicht es, die ersten Spreizstege und die zweiten Spreizstege funktional voneinander zu trennen und auch in unterschiedlicher Weise auszugestalten. Dies kann zum Beispiel dadurch erreicht werden, dass die ersten Spreizstege als Teil einer ersten Spritzgusskomponente geformt werden und nachfolgend verbleibende Leerräume unter Erzeugung der zweiten Spreizstege mit Material ausgefüllt werden, und zwar unter Generierung einer zweiten Spritzgusskomponente. Durch dieses zwei- (oder mehr-) stufige Herstellungsverfahren kann sowohl das getrennte Ausbilden der ersten und zweiten Spreizstege erreicht werden.

Gemäß einem Ausführungsbeispiel können die ersten Spreizstege und die zweiten Spreizstege aus unterschiedlichen Materialien oder aus dem gleichen Material hergestellt sein. Wenn die ersten Spreizstege und die zweiten Spreizstege aus unterschiedlichen Materialien hergestellt sind, kann die jeweilige Materialwahl in Einklang mit der jeweiligen Funktion der ersten Spreizstege bzw. der zweiten Spreizstege erfolgen. Wenn die ersten Spreizstege und die zweiten Spreizstege aus demselben Material hergestellt sind, können gegebenenfalls unerwünschte Materialbrücken vermieden.

Gemäß einem Ausführungsbeispiel können die ersten Spreizstege und die zweiten Spreizstege in Umfangsrichtung alternierend angeordnet sein. Mit anderen Worten können sich in Umfangsrichtung jeweils ein erster Spreizsteg und ein zweiter Spreizsteg abwechseln. Dadurch ist eine sehr homogene Krafteinleitung von dem Dübel in den Untergrund ermöglicht.

Gemäß einem Ausführungsbeispiel können die ersten Spreizstege und die zweiten Spreizstege zueinander formschlüssig ausgebildet sein. Eine Außenfläche des Spreizbereichs kann dann vorzugsweise vollständig geschlossen bzw. lückenfrei sein. Auf diese Weise ist ein leicht handhabbarer und kompakter Dübel mit universeller Einsetzbarkeit in unterschiedlichen Untergründen geschaffen.

Gemäß einem Ausführungsbeispiel kann der Dübel als Kunststoffdübel ausgebildet sein. Insbesondere kann der Dübel nur aus Kunststoff bestehen. Dies ermöglicht eine wenig aufwendige Fertigung (zum Beispiel mittels Spritzgießens), die angesichts des vollumfänglichen Vorsehens der Spreizstege mit einer hohen Verankerungskraft des Dübels in einem Untergrund kombiniert werden kann.

Gemäß einem Ausführungsbeispiel kann der Spreizbereich in Umfangsrichtung spaltfrei geschlossen sein. Anschaulich weist gemäß der beschriebenen Ausführungsform der Spreizbereich keine Schlitze zwischen Spreizstegen auf und ist daher (zumindest im Wesentlichen) vollumfänglich geschlossen. Gemäß einem solchen Ausführungsbeispiel kann der Dübel entlang seines gesamten Umfangs oder zumindest im Wesentlichen entlang seines gesamten Umfangs von Zwischenräumen frei sein, bevor das Befestigungselement in die Öffnung des Dübels eingeführt wird. Auf diese Weise ist es möglich, mittels der Spreizstege entlang des gesamten Umfangs des Dübels eine im Wesentlichen gleiche radial nach außen gerichtete Befestigungskraft auf einen Untergrund auszuüben, in den der Dübel samt Befestigungselement eingeführt ist. Wenn der gesamte (oder im Wesentlichen der gesamte) Umfang des Dübels mit Kunststoff gefüllt ist, kann durch Vermeiden größerer Luftlöcher zwischen benachbarten Spreizstegen auch ein unerwünschter Verlust an Haltekraft vermieden werden. Ausgeprägte großflächige Berührflächen zwischen benachbarten Spreizstegen sollen allerdings vermieden werden.

Gemäß einem Ausführungsbeispiel können die Spreizstege ausgebildet sein, bei Einführen eines Befestigungselements in den, in einen als Vollkörper ausgebildeten Untergrund eingeführten Dübel getrennt voneinander aufzuspreizen. Wird also zum Beispiel eine Schraube in die Öffnung des Dübels eingedreht, der in ein Sackloch oder Durchgangsloch des Vollkörpers eingeführt ist, übt die Schraube (oder ein anderes Befestigungselement) eine radial nach außen gerichtete Kraft auf die in Umfangsrichtung angeordneten Spreizstege aus und verspreizt diese im Wesentlichen voneinander unabhängig bzw. separat. Auf diese Weise ist eine sehr zuverlässige Verankerung von Dübel und Befestigungselement in dem Vollkörper sichergestellt, da in Umfangsrichtung im Wesentlichen durchgehend eine Übertragung einer radial nach außen gerichteten Befestigungskraft von dem Dübel auf den Untergrund erfolgt.

Gemäß einem Ausführungsbeispiel können die Spreizstege ausgebildet sein, bei Einführen eines Befestigungselements in den, in einen als Hohlkörper ausgebildeten Untergrund eingeführten Dübel miteinander zu verknoten. Dieselben Spreizstege, die bei Einführen des Dübels in einen als Vollkörper ausgebildeten Untergrund eine nach außen gerichtete vollumfängliche Verspreizung ermöglichen, können bei alternativem Einführen des Dübels in einen als Hohlkörper ausgebildeten Untergrund eine verdrillende Verknotung miteinander erfahren. Anschaulich können die ersten und zweiten Spreizstege unter dem Einfluss eines Drehmoments oder einer anderen geeigneten Kraft miteinander verhaken und dann eine Knotenstruktur in dem Hohlraum (zum Beispiel an einer Rückwand einer den Hohlraum begrenzenden Platte) ausbilden.

Gemäß einem Ausführungsbeispiel des Dübels kann der Kopf vor Einbringen des Befestigungselements in den Dübel geschlossen sein. Anschaulich kann der Kopf als geschlossene Kappe ausgebildet sein, die im montierten Zustand des Dübels im Bohrlochtiefsten angeordnet sein kann. Auf diese Weise kann vermieden werden, dass Bohrmehl, Schmutz, etc. in die Öffnung des Dübels zum Aufnehmen des Befestigungselements eindringt.

Gemäß einem Ausführungsbeispiel kann der Fuß eine Mitdrehsicherung aufweisen, insbesondere ausgebildet als in Umfangsrichtung außenseitig verteilt angeordnete und radial nach außen überstehende Dorne. Eine solche Mitdrehsicherung verunmöglicht oder unterdrückt, dass sich der Dübelfuß unerwünscht mitdreht, wenn ein zum Beispiel als Schraube ausgebildetes Befestigungselement in die Öffnung des Dübels und dann in den Kopf eingedreht wird. Dadurch kann ein durch ein unerwünschtes Mitdrehen des Dübelfußes beim Setzen des Befestigungselements einhergehender Verlust an Befestigungskraft des Dübels in dem Untergrund vermieden werden. Auch kann dadurch bewirkt werden, dass beim Eindringen des drehenden Befestigungselements in den Kopf der Fuß aufgrund der Mitdrehsicherung nicht mitdreht und die Spreizstege daher verknotet werden.

Gemäß einem Ausführungsbeispiel können der Kopf und/oder der Fuß ausgebildet sein, dass dort im Betrieb keine Spreizung erfolgt. Die beiden einander gegenüberliegenden Endbereiche des Dübels, die Fuß und Kopf bilden, können somit der Stabilität dienen, wohingegen nur ein dazwischen angeordneter Mittenbereich die Spreizfunktion des Dübels verwirklicht. Kopf und Fuß können somit auch im gesetzten Zustand im Wesentlichen in unveränderter Form verbleiben.

Gemäß einem Ausführungsbeispiel können die ersten Spreizstege mittels eines ersten Spritzgussverfahrens und nachfolgend die zweiten Spreizstege mittels eines nachfolgenden zweiten Spritzgussverfahrens hergestellt werden. Zwei aufeinanderfolgende Spritzgussverfahren sind besonders gut geeignet, den Spreizbereich mit in Umfangsrichtung bündig aneinander anliegenden, aber getrennten Spreizstegen herzustellen.

Gemäß einem Ausführungsbeispiel können bei dem Verfahren die ersten Spreizstege mittels eines ersten Werkzeugs (insbesondere mittels eines ersten Spritzgusswerkzeugs) und nachfolgend die zweiten Spreizstege mittels eines anderen zweiten Werkzeugs (insbesondere mittels eines zweiten Spritzgusswerkzeugs) hergestellt werden. Es können also zwei unterschiedliche Spritzgusswerkzeuge zum Einsatz kommen, deren jeweilige Formgebung durch die durch sie auszubildenden Strukturmerkmale des Dübels festgelegt ist.

Gemäß einem Ausführungsbeispiel kann ein Einbringen des Dübels und nachfolgend des Befestigungselements in den Untergrund nach Bilden einer Vorbohrung in dem Untergrund erfolgen. Eine solche Vorbohrung in einem Untergrund, der als Vollkörper ausgebildet ist, kann ein Sackloch sein. In einem Untergrund, der als Hohlkörper ausgebildet ist, kann die Vorbohrung ein Durchgangsloch sein, das sich bis in mindestens einen ersten Hohlraum hinein erstreckt.

Im Folgenden werden exemplarische Ausführungsbeispiele der vorliegenden Erfindung mit Verweis auf die folgenden Figuren detailliert beschrieben.
Figur 1 zeigt eine dreidimensionale Ansicht eines Dübels gemäß einem exemplarischen Ausführungsbeispiel der Erfindung.
Figur 2 zeigt eine andere dreidimensionale Ansicht des Dübels gemäß Figur 1.
Figur 3 zeigt eine dreidimensionale Ansicht eines Details des Dübels gemäß Figur 1 und Figur 2.
Figur 4 zeigt eine dreidimensionale Ansicht einer ersten Spritzgusskomponente des Dübels gemäß Figur 1 bis Figur 3.
Figur 5 zeigt eine andere dreidimensionale Ansicht der ersten Spritzgusskomponente gemäß Figur 4.
Figur 6 zeigt eine dreidimensionale Ansicht eines Details der ersten Spritzgusskomponente gemäß Figur 4 und Figur 5.
Figur 7 zeigt eine dreidimensionale Ansicht eines anderen Details der ersten Spritzgusskomponente gemäß Figur 4 und Figur 5.
Figur 8 zeigt eine dreidimensionale Ansicht einer zweiten Spritzgusskomponente des Dübels gemäß Figur 1 bis Figur 3.
Figur 9 zeigt eine andere dreidimensionale Ansicht der zweiten Spritzgusskomponente gemäß Figur 8.
Figur 10 zeigt eine dreidimensionale Ansicht eines Details der zweiten Spritzgusskomponente gemäß Figur 8 und Figur 9.
Figur 11 zeigt einen Dübel, bei dem Spreizstege in einem als Vollkörper ausgebildeten Untergrund aufgespreizt sind.
Figur 12 zeigt den Dübel gemäß Figur 11, bei dem die Spreizstege in einem als Hohlkörper ausgebildeten Untergrund verknotet sind.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Ein Nachteil der oben gewürdigten herkömmlichen Zweikomponenten-Dübel besteht darin, dass bei Einschlagen des Dübels in ein enges Bohrloch zum Beispiel mit einem Hammer Dübelkomponenten, beispielsweise die Hülsen, an Gleitflächen aneinander abgleiten. Dies erschwert schon bei einem geringen axialen Versatz das Setzen des Dübels und konterkariert einen definierten Setzvorgang. Folglich kann es unter ungünstigen Umständen zu Fehlsetzungen des Dübels kommen.

Gemäß einem exemplarischen Ausführungsbeispiel der Erfindung können derartige Fehlsetzungen des Dübels vermieden werden und kann ein definierter und sauberer Setzvorgang ermöglicht werden. Um dies zu erreichen, kann gemäß einem exemplarischen Ausführungsbeispiel der Erfindung ein Zweikomponenten-Dübel mit (vorzugsweise 90°-) verzahnten Schenkeln ausgestattet werden. Diese (vorzugsweise 90°-) Verzahnung von Spreizschenkeln einer ersten Spritzgusskomponente und einer zweiten Spritzgusskomponente ermöglicht erst ein radiales Aufspreizen der Spreizschenkel bei Einführen eines Befestigungselements. Wenn die in Umfangsrichtung alternierend angeordneten Spreizschenkel der beiden Spritzgusskomponenten infolge des radialen Aufweitens einen Abstand voneinander haben und somit auch räumlich voneinander vollständig getrennt sind, kann begonnen werden, ein Verknoten der Spreizschenkel zu initiieren. Ein Gleiten der beiden Spritzgusskomponenten aneinander im Bereich der Spreizschenkel oder Spreizstege beim Einbringen des Befestigungselements in den Dübel wird mit Vorteil durch das Ausbilden axial verzahnter und überlappungsfreier Spreizschenkel verunmöglicht, insbesondere bei Ausbilden mit einer 90°-Verzahnung untereinander. Somit kann ein im Rahmen der Erfindung unerwünschtes axiales Gleiten im Spreizbereich durch die Verzahnung gänzlich verunmöglicht werden. Das Ausbilden einer stark ausgeprägten Verzahnung kann durch die alternierenden breiteren und schmäleren Abschnitte beider Spreizstegtypen aus bevorzugt besonders vielen und möglichst kleinen Einzelzähnen zwischen den Spreizstegen bewerkstelligt werden, um durch Erhöhung der Reibung bzw. eines Formschlusses jegliches Gleiten auszuschließen. Auch können die ersten Spreizstege der ersten Spritzgusskomponente, auf welche die zweite Spritzgusskomponente aufgespritzt werden kann, ohne Bodenflächen der ersten Spreizstege ausgebildet werden, sodass es keine mantelseitige Kontaktfläche zwischen den ersten und den zweiten Spreizstegen gibt. Aneinander gleitende Hülsen sind erfindungsgemäß vermieden.

Material der beiden Spritzgusskomponenten im Bereich des Dübelkopfes kann in axialer Richtung aneinander gesichert sein, bevorzugt durch Vorsprünge der ersten Spritzgusskomponente, die in entsprechende Aussparungen der zweiten Spritzgusskomponente formschlüssig eingreifen. Auf diese Weise kann auch ein unerwünschter Versatz der beiden Spritzgusskomponenten zueinander im Bereich des Dübelkopfes ausgeschlossen werden. Anschaulich kann somit am Dübelkopf die erste Spritzgusskomponente mit einem oder mehreren Vorsprüngen ausgebildet werden, auf welche die zweite Spritzgusskomponente abschnittsweise (aber vorzugsweise nicht im Spreizbereich, wo die ersten Spreizschenkel nicht durch zweite Spreizschenkel überspritzt werden sollen, sondern die zweiten Spreizschenkel nur zwischen den ersten Spreizschenkeln eingespritzt werden sollen) aufgespritzt wird. Es ist dadurch kein axialer Versatz zwischen den beiden Spritzgusskomponenten am Dübelkopf möglich, auch nicht im gesetzten Zustand.

Im Bereich des Dübelfußes kann die zweite Spritzgusskomponente mit einem Ring ausgebildet werden, wobei eine Verdrehsicherung in axialer Richtung zwischen diesem Ring und einem Kragen am Dübelfuß angeordnet sein kann. Auf diese Weise ist sichergestellt, dass auch im Bereich der Verdrehsicherung kein axialer Versatz zwischen den beiden Spritzgusskomponenten möglich ist. Insbesondere kann entlang des gesamten Dübels kein axiales Gleiten auftreten.

Mit Vorteil können die ersten und zweiten Spreizschenkel in Umfangsrichtung eng aneinander anliegen, ohne axial zueinander versetzbar zu sein. Dies wird durch das Vorsehen axial verzahnter und überlappungsfreier Spreizschenkel im Spreizbereich bewerkstelligt. Anders ausgedrückt bilden überlappungsfreie Spreizschenkel den Spreizbereich. Die Spreizschenkel können im Dübelkopf aneinander befestigt werden. Allerdings erfolgt diese Befestigung so, dass kein axialer Versatz beim Dübel möglich ist und jegliches Gleiten der Spritzgusskomponenten aneinander - insbesondere im Spreizbereich - mechanisch verunmöglicht ist.

Gemäß einem Ausführungsbeispiel kann ein Mindestdurchmesser einer als Befestigungselement einsetzbaren Schraube in Abhängigkeit vom Dübel ausgewählt werden. Mit Vorteil soll ein solches als Schraube ausgebildetes Befestigungselement radial ausreichend dick sein, damit - ausgelöst durch das Einführen des Befestigungselements in den Spreizbereich des Dübels - erst ein radiales Aufspreizen der Spreizstege erfolgt, und erst danach ein - ausgelöst durch das fortgesetzte Einführen des Befestigungselements in den Dübel bis hinein in den Dübelkopf - Verknoten der bereits aufgespreizten und voneinander räumlich getrennten Spreizstege erfolgen kann. Hierfür ist eine gewisse Dicke der als Befestigungselement eingesetzten Schraube vorteilhaft.

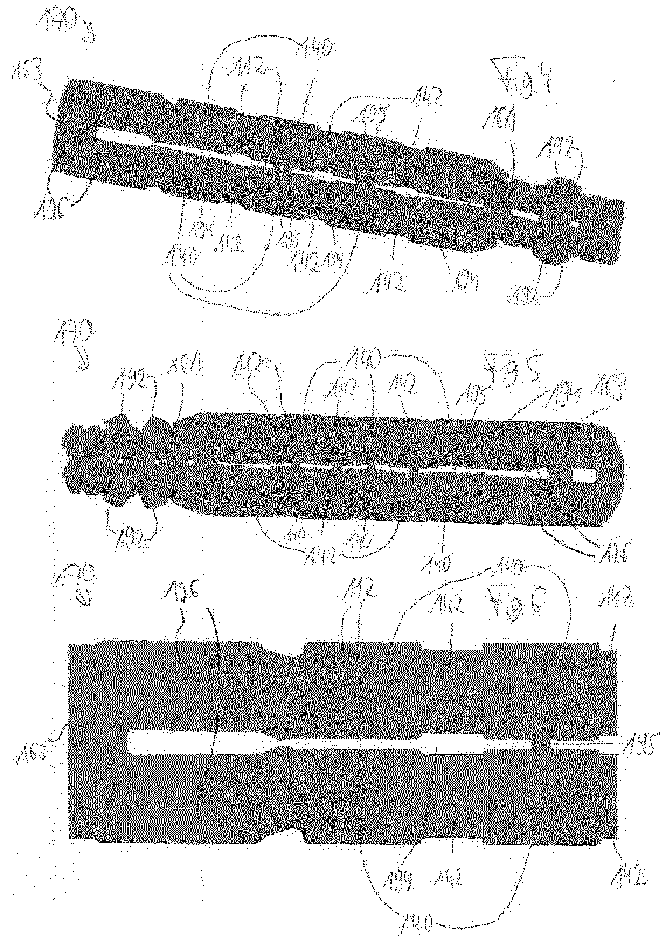

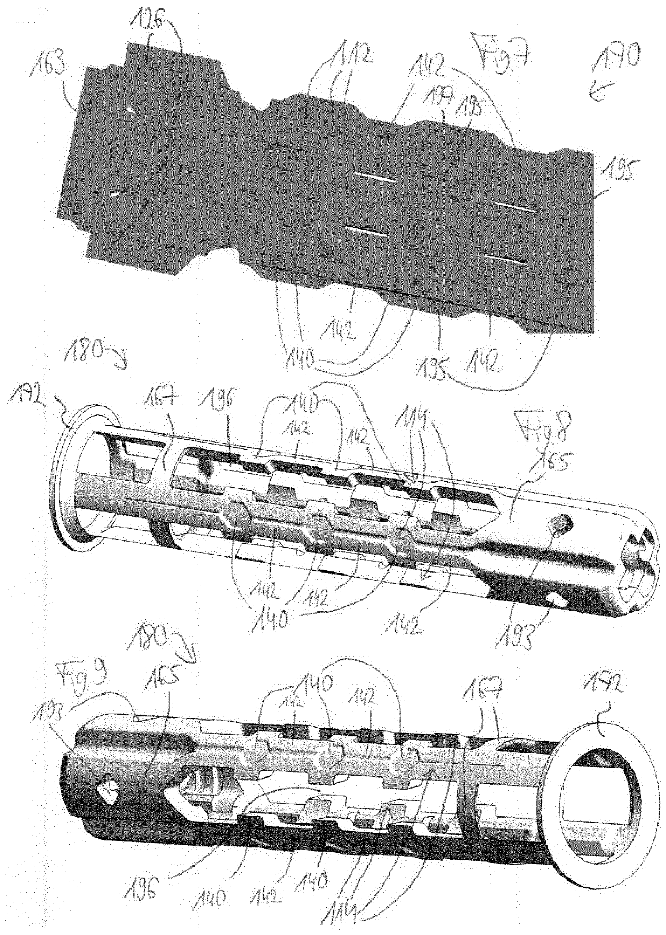

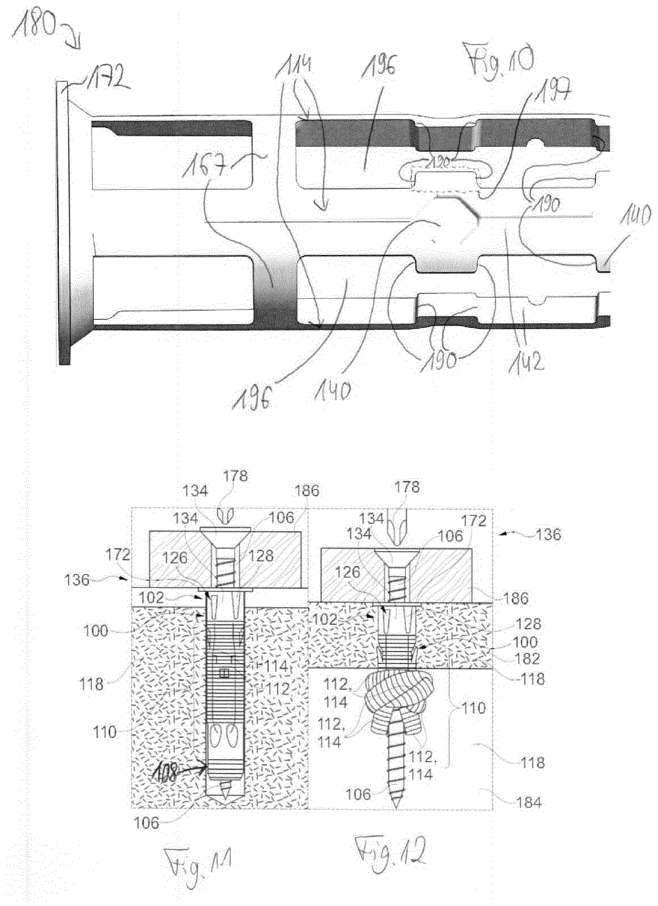

**Figur 1** zeigt eine dreidimensionale Ansicht eines Dübels 100 gemäß einem exemplarischen Ausführungsbeispiel der Erfindung. **Figur 2** zeigt eine andere dreidimensionale Ansicht des Dübels 100 gemäß Figur 1. **Figur 3** zeigt eine dreidimensionale Ansicht eines Details des Dübels 100 gemäß Figur 1 und Figur 2. **Figur 4** zeigt eine dreidimensionale Ansicht einer ersten Spritzgusskomponente 170 des Dübels 100 gemäß Figur 1 bis Figur 3. **Figur 5** zeigt eine andere dreidimensionale Ansicht der ersten Spritzgusskomponente 170 gemäß Figur 4. **Figur 6** zeigt eine dreidimensionale Ansicht eines Details der ersten Spritzgusskomponente 170 gemäß Figur 4 und Figur 5. **Figur 7** zeigt eine dreidimensionale Ansicht eines anderen Details der ersten Spritzgusskomponente 170 gemäß Figur 4 und Figur 5. **Figur 8** zeigt eine dreidimensionale Ansicht einer zweiten Spritzgusskomponente 180 des Dübels 100 gemäß Figur 1 bis Figur 3. **Figur 9** zeigt eine andere dreidimensionale Ansicht der zweiten Spritzgusskomponente 180 gemäß Figur 8. **Figur 10** zeigt eine dreidimensionale Ansicht eines Details der zweiten Spritzgusskomponente 180 gemäß Figur 8 und Figur 9.

Der in Figur 1 bis Figur 10 dargestellte Dübel 100 ist als Kunststoffdübel ausgebildet, d.h. besteht ausschließlich aus Kunststoff. Kunststoffe der ersten Spritzgusskomponente 170 und der zweiten Spritzgusskomponente 180 können identisch oder unterschiedlich sein.

Der Dübel 100 weist als ersten Endabschnitt einen Fuß 102 mit einem außenseitigen ringförmigen Kragen 172 und einer Öffnung 104 zum Einführen eines vorzugsweise als Schraube ausgebildeten und in Figur 11 und Figur 12 dargestellten Befestigungselements 106 auf. Die Öffnung 104 an der Außenseite des Dübels 100 im Bereich des Fußes 102 mündet im Inneren des Dübels 100 in einen Aufnahmekanal zum Aufnehmen des Befestigungselements 106. An seiner Außenseite hat der Fuß 102 eine Mitdrehsicherung 126 zum Vermeiden eines Mitdrehens des Dübels 100 bei einem drehenden Einführen eines als Schraube ausgebildeten Befestigungselements 106 in die Öffnung 104 und nachfolgend in den Aufnahmekanal. Die Mitdrehsicherung 126 ist in dem dargestellten Ausführungsbeispiel durch mehrere in Umfangsrichtung außenseitig verteilt angeordnete und radial über eine Mantelfläche des Dübels 100 überstehende Dorne (zum Beispiel aus Hartkunststoff) mit scharfen Schneidkanten ausgebildet. Diese Schneidkanten können sich nach Einführen des Dübels 100 in ein Bohrloch (oder dergleichen) in einem Untergrund 118 (siehe Figur 11 und Figur 12) in den Untergrund 118 eingraben und dadurch einen Verdrehschutz bewerkstelligen.

Ferner weist der Dübel 100 als zweiten Endabschnitt, der dem Fuß 102 gegenüberliegt, einen kappenförmigen Kopf 108 am Einsteckende des Dübels 100 auf. Der kappenförmige und daher zunächst geschlossene Kopf 108 weist eine distale Stirnplatte 120 auf. Bei Einbringen eines Befestigungselements 106, insbesondere bei Einschrauben einer Schraube, in die Öffnung 104 bzw. den zugehörigen Aufnahmekanal des Dübels 100 wird die Stirnplatte 120 von der Spitze des Befestigungselements 106 durchdrungen (vergleiche Figur 11 und Figur 12).

Darüber hinaus ist ein Spreizbereich 110 zwischen dem Fuß 102 und dem Kopf 108 angeordnet und mit einer Mehrzahl von in Umfangsrichtung bündig bzw. unmittelbar aneinander anliegenden, aber getrennten axial verlaufenden Spreizstegen 112, 114 versehen. Der Spreizbereich 110 ist jener Bereich des Dübels 100, der nach Einbringen des Dübels 100 in einen als Vollkörper ausgebildeten Untergrund 118 (siehe Figur 11) und nach Einführen eines als Schraube ausgebildeten Befestigungselements 106 (siehe ebenfalls Figur 11) in die Öffnung 104 radial aufgeweitet wird und dabei aufspreizt. Hingegen erfährt weder der Fuß 102 noch der Kopf 108 bei der Montage des Dübels 100 samt Befestigungselement 106 eine Spreizung.

Erste Spreizstege 112 der ersten Spritzgusskomponente 170 sind, wie in Figur 4 bis Figur 7 dargestellt, zwar kopfseitig und fußseitig miteinander verbunden, sind jedoch nicht mit zweiten Spreizstegen 114 der zweiten Spritzgusskomponente 180 verbunden. Die zweiten Spreizstege 114 sind sowohl am Fuß 102 als auch am Kopf 108 miteinander verbunden und sind einstückig und einstoffig mit verbleibendem Material der zweiten Spritzgusskomponente 180 ausgebildet, wie in Figur 8 bis Figur 10 dargestellt.

Die erste Spritzgusskomponente 170 und die zweite Spritzgusskomponente 180 können wahlweise aus unterschiedlichen Materialien oder aus dem gleichen Material hergestellt sein, wobei diese Materialien in zwei getrennten und aufeinanderfolgenden Spritzgussverfahren zum Einsatz kommen.

Wie in Figur 1 bis Figur 3 zu erkennen, sind die ersten Spreizstege 112 und die zweiten Spreizstege 114 in Umfangsrichtung des Dübels 100 alternierend angeordnet. Im dargestellten Ausführungsbeispiel gibt es vier erste Spreizstege 112 und vier zweite Spreizstege 114, wobei eine andere Anzahl erster Spreizstege 112 bzw. zweiter Spreizstege 114 möglich ist. Die ersten Spreizstege 112 und die zweiten Spreizstege 114 sind zueinander formschlüssig ausgebildet, aber bilden voneinander getrennte Körper, die auch getrennt voneinander aufspreizen können. Zum Beispiel Figur 1 bis Figur 3 kann entnommen werden, dass der Spreizbereich 110 in Umfangsrichtung spaltfrei geschlossen ist. Dies wird erreicht, indem jeweils benachbarte erste Spreizstege 112 und zweite Spreizstege 114 direkt benachbart zueinander anliegen.

Figur 1 bis Figur 3 kann auch entnommen werden, dass die ersten Spreizstege 112 und die zweiten Spreizstege 114 miteinander verzahnt sind. Zueinander invers geformte Zahnstrukturen der Spreizstege 112, 114 sind derart konfiguriert, dass in Axialrichtung 191 (die einer Einführrichtung eines Befestigungselements 106 in die Öffnung 104 des Dübels 100 entspricht, siehe Figur 3) des Dübels 100 abwechselnd breitere Abschnitte 140 und schmälere Abschnitte 142 gebildet sind.

Im Spreizbereich 110 ist ein hohler und sich an die Öffnung 104 anschließender Aufnahmekanal zum Aufnehmen eines Befestigungselements 106 im Inneren des Dübels 100 ausgebildet. Wird das Befestigungselement 106 in die Öffnung 104 und nachfolgend den Aufnahmekanal eingeführt, drückt das Befestigungselement 106 die ersten Spreizstege 112 und die zweiten Spreizstege 114 nach außen.

Figur 4 bis Figur 7 zeigt anschaulich das Ergebnis des ersten Spritzgussprozesses, mit dem die erste Spritzgusskomponente 170 gefertigt wird. In Figur 4 und Figur 5 ist zu erkennen, dass die vier ersten Spreizstege 112 am Kopf 108 und am Fuß 102 miteinander verbunden sind.

Figur 8 bis Figur 10 stellt die zweite Spritzgusskomponente 180 als Ergebnis des zweiten Spritzgussprozesses isoliert dar, d.h. ohne Darstellung der ersten Spritzgusskomponente 170. Die vier zweiten Spreizstege 114 sind ebenfalls am Kopf 108 und am Fuß 102 miteinander verbunden, nicht aber mit den ersten Spreizstegen 112.

Der in Figur 1 bis Figur 3 dargestellte fertige Dübel 100 enthält die ersten Spreizstege 112 als Teil der ersten Spritzgusskomponente 170 und die zweiten Spreizstege 114 als Teil der anderen zweiten Spritzgusskomponente 180. Zwischen den ersten Spreizstegen 112 und den zweiten Spreizstegen 114 ist keine mechanische Verbindung gebildet.

Zum Herstellen des Dübels 100 kann zunächst die erste Spritzgusskomponente 170 gemäß Figur 4 bis Figur 7 durch ein erstes Spritzgussverfahren unter Verwendung eines ersten Spritzgusswerkzeugs hergestellt werden. Dabei werden auch die ersten Spreizstege 112 gebildet. Nachfolgend kann die zweite Spritzgusskomponente 180 gemäß Figur 8 bis Figur 10 durch einen zweites Spritzgussverfahren unter Verwendung eines zweiten Spritzgusswerkzeugs hergestellt werden, wodurch auch die zweiten Spreizstege 114 gebildet werden. Hierbei kann die erste Spritzgusskomponente 170 durch die zweite Spritzgusskomponente 180 abschnittsweise überspritzt werden, vorliegend im Bereich von Kopf 108 und Fuß 102 des Dübels. Als Ergebnis werden unter anderem die Spreizstege 112, 114 enthalten, die zwar aneinander anliegen, aber getrennte Körper sind, die bei Einbringen eines Befestigungselements 106 in den Dübel 100 auch getrennt voneinander aufspreizen können.

Wie in Figur 4 bis Figur 7 dargestellt, sind die ersten Spreizstege 112 im Bereich des Kopfs 108 und im Bereich des Fußes 102 durch Material der ersten Spritzgusskomponente 170 miteinander einstückig verbunden. Im Bereich des Kopfs 108 erfolgt dies durch eine umfänglich geschlossene Ringstruktur 161. Im Bereich des Fußes 102 erfolgt dies durch eine umfänglich geschlossene Ringstruktur 163.

In entsprechender Weise sind, wie in Figur 8 bis Figur 10 dargestellt, die zweiten Spreizstege 114 im Bereich des Kopfs 108 und im Bereich des Fußes 102 durch Material der zweiten Spritzgusskomponente 180 miteinander einstückig verbunden. Im Bereich des Kopfs 108 erfolgt dies durch eine umfänglich geschlossene Ringstruktur 165. Im Bereich des Fußes 102 erfolgt dies durch eine umfänglich geschlossene Ringstruktur 167, die von dem Kragen 172 beabstandet ist.

Darüber hinaus ist im Bereich des Kopfs 108 und im Bereich des Fußes 102 Material der ersten Spritzgusskomponente 170 und der zweiten Spritzgusskomponente 180 miteinander formschlüssig verbunden. Im Bereich des Kopfs 108 erfolgt dies mittels noppenförmiger Überstände 192 der ersten Spritzgusskomponente 170, die in korrespondierende Aussparungen 193 der zweiten Spritzgusskomponente 180 eingreifen. Die Aussparungen 193 sind als Durchgangslöcher in einer Endkappe der zweiten Spritzgusskomponente 180 ausgebildet. Durch die beschriebenen Maßnahmen sind sowohl im Bereich des Kopfs 108 als auch im Bereich des Fußes 102 des Dübels 100 Stabilisierungsstrukturen geschaffen, die zu einer festen Verankerung von Materialkomponenten der ersten Spritzgusskomponente 170 und der zweiten Spritzgusskomponente 180 führen und jeglicher Relativbewegung dieser Materialkomponenten entgegenwirken. Insbesondere ist dadurch eine Axialverschiebung zwischen der ersten Spritzgusskomponente 170 und der zweiten Spritzgusskomponente 180 mechanisch verunmöglicht.

Bezugnehmend auf Figur 4 bis Figur 10 ist eine tangentiale Länge der schmäleren Abschnitte 142 der ersten Spreizstege 112 und der zweiten Spreizstege 114 geringer als eine jeweilige radiale Dicke der ersten Spreizstege 112 bzw. der zweiten Spreizstege 114. Anschaulich sind die Spreizstege 112, 114 als dünne Streifen nebeneinanderliegend gebildet, die daher mit geringem Krafteintrag aufspreizbar bzw. verknotbar sind, aber eine gewisse Steifigkeit gegen axiale Stauchung bewirken. Dadurch ist ein stabiler und mit geringer Setzkraft montierbarer Dübel 100 geschaffen.

Figur 4 bis Figur 7 zeigen, dass die erste Spritzgusskomponente 170 im Spreizbereich 110 eine umfängliche Gitterstruktur oder Käfigstruktur mit einer Mehrzahl von Durchgangsschlitzen 194 zwischen benachbarten ersten Spreizstegen 112 hat. Besagte Durchgangsschlitze 194 sind nur durch herstellungsbedingte optionale noppenförmige Punktkontakte 195 als Kontaktstellen benachbarter erster Spreizstege 112 unterbrochen. Die Punktkontakte 195 können dazu dienen, während der Herstellung die ersten Spreizstege 112 in Relation zueinander zu halten, wenn die zweiten Spreizstege 114 am Werkzeug gespritzt werden. Im Betrieb des Dübels 100 reißen die Punktkontakte 195 beim Einschrauben einer als Schraube ausgebildeten Befestigungselements 106.

In ähnlicher Weise ist auch die zweite Spritzgusskomponente 180 im Spreizbereich 110 als umfängliche Gitterstruktur oder Käfigstruktur mit einer Mehrzahl von ununterbrochenen Durchgangsschlitzen 196 zwischen benachbarten zweiten Spreizstegen 114 ausgebildet, siehe Figur 8 bis Figur 10. Die Gitter- bzw. Käfigstrukturen beider Spritzgusskomponenten 170, 180 im Spreizbereich 110 sind zueinander im Wesentlichen invers, sodass die ersten Spreizstege 112 und die zweiten Spreizstege 114 nur gemeinsam eine einzige in Umfangsrichtung im Wesentlichen geschlossene Manschettenstruktur bilden. Durch das Ausbilden des Dübels 100 mit nur einer einzigen Manschettenstruktur, die erst durch die Kombination der ersten Spritzgusskomponente 170 und der zweiten Spritzgusskomponente 180 gebildet wird, kann der Dübel 100 mit geringem Materialaufwand gefertigt werden.

Wie am besten in Figur 1 bis Figur 3 erkennbar, hat der Dübel 100 im Spreizbereich 110 axial zwischen dem Fuß 102 und dem Kopf 108 in Umfangsrichtung alternierend und überlappungsfrei angeordnete erste und zweite Spreizstege 112, 114. Infolge dieser Konfiguration kann jeder der ersten Spreizstege 112 und jeder der zweiten Spreizstege 114 unabhängig von anderen Spreizstegen 112, 114 bewegt werden. Bei dieser Ausgestaltung liegt im Spreizbereich 110 kein Material der ersten Spreizstege 112 und der zweiten Spreizstegen 114 in Radialrichtung übereinander, sodass keine mantelseitige Berührfläche zwischen den ersten Spreizstegen 112 und den zweiten Spreizstegen 114 gebildet ist. Anders ausgedrückt ist der Spreizbereich 110 in seiner Umfangsrichtung durch eine abwechselnde Sequenz der ersten Spreizstege 112 der ersten Spritzgusskomponente 170 und der zweiten Spreizstege 114 der zweiten Spritzgusskomponente 180 des Dübels 100 gebildet. Wie Figur 3 zu erkennen ist, kann ein Paar von jeweils benachbarten ersten und zweiten Spreizstegen 112, 114 zwar aneinander angrenzen, überlappt aber nicht. Dies bedeutet, dass Material der zweiten Spreizstege 114 nur in Zwischenräumen zwischen zwei jeweils benachbarten ersten Spreizstegen 112 vorhanden ist, aber in radialer Richtung Material der ersten Spreizstege 112 nicht berührend überdeckt.

Indem die ersten und zweiten Spreizstege 112, 114 in Axialrichtung 191 des Dübels 100 alternierend breitere Abschnitte 140 und schmälere Abschnitte 142 aufweisen, die eine stark reibungserhöhende bzw. formschlüssige Verzahnung in Axialrichtung 191 bilden, ist ein unerwünschtes axiales Gleiten zwischen den ersten Spreizstegen 112 und den zweiten Spreizstegen 114 mechanisch unmöglich gemacht. Dies kann mit besonders hoher Zuverlässigkeit dadurch erreicht werden, dass die miteinander verzahnten breiteren Abschnitte 140 der ersten und zweiten Spreizstege 112, 114 aneinander anliegende Kanten 190 aufweisen, die senkrecht zu der Axialrichtung 191 des Dübels 100 aneinander angrenzend angeordnet sind, siehe Figur 3. Anschaulich können paarweise parallel aneinander anliegende Kanten 190 der Spreizstege 112, 114 orthogonal zur Axialerstreckung 191 zuverlässig verhindern, dass sich die Spreizstege 112, 114 in der senkrecht zu der Kantenerstreckung orientierten Axialrichtung 191 aneinander gleitend bewegen. Anschaulich scheitert der Versuch, miteinander verzahnte Spreizstege 112, 114 in Axialrichtung 191 relativ zueinander zu bewegen, daran, dass keine Kraftkomponente die senkrecht zur Axialrichtung 191 angeordneten Kanten 190 aneinander abgleiten lassen kann. Da die alternierenden breiteren Abschnitte 140 und schmäleren Abschnitte 142 der ersten Spreizstege 112 und der zweiten Spreizstege 114 im Wesentlichen rechteckförmige Zahnstrukturen 197 bilden (vergleiche Figur 7 und Figur 10), bilden die alternierenden breiteren Abschnitte 140 und schmäleren Abschnitte 142 der ersten Spreizstege 112 und der zweiten Spreizstegen 114 miteinander einen gleithindernden Formschluss. Insbesondere in Figur 1 und Figur 3 ist gut erkennbar, dass in der Axialrichtung 191 Ränder der alternierend breiteren Abschnitte 140 und schmäleren Abschnitte 142 sowohl der ersten Spreizstege 112 als auch der zweiten Spreizstege 114 sich entlang einer periodischen Rechteckfunktion bzw. -relation erstrecken, d.h. als Abfolge oberer und unterer Plateaus mit dazwischen liegenden, die oberen und unteren Plateaus verbindenden annähernd senkrechten Kanten 190.

Aufgrund der beschriebenen Konfiguration des Spreizbereichs 110 führt ein drehendes Einführen eines insbesondere als Schraube ausgebildeten Befestigungselements (vergleiche Bezugszeichen 106 in Figur 12) in die Öffnung 104 des Dübels 100 in einem Bohrloch eines beispielsweise als Hohlkörper ausgebildeten Untergrunds 118 zunächst zu einem gleitfreien rein radialen Aufspreizen bzw. Aufweiten der ersten und zweiten Spreizstege 112, 114 unabhängig voneinander. Beim Aufspreizen erfolgt also keine Wechselwirkung zwischen den ersten Spreizstegen 112 und den zweiten Spreizstegen 114. Somit spreizt der Spreizbereich 110 des Dübels 100 zunächst senkrecht zur Axialrichtung 191 auf, ohne dass die Spreizstege 112, 114 verdrillt werden. In dieser Phase hat das Befestigungselement 106 die Stirnplatte 120 des Kopfs 108 noch nicht durchdrungen. Der Spreizbereich 110 zwischen dem Fuß 102 und dem Kopf 108 ist so ausgebildet, dass bei dem Einführen eines Befestigungselements 106 in die Öffnung 104 also zunächst ein ausschließlich radiales Aufweiten der ersten und zweiten Spreizstege 112, 114 ohne axiale Relativbewegung der ersten und zweiten Spreizstege 112, 114 zueinander erfolgt. Aufgrund der beschriebenen Konfiguration der ersten Spreizstege 112 und der zweiten Spreizstege 114 erfolgt bei Einführen eines Befestigungselements 106 in die Öffnung 104 kein Gleiten zwischen den ersten Spreizstegen 112 und den zweiten Spreizstegen 114, da dies durch die überlappungsfreie und verzahnte Anordnung der ersten Spreizstege 112 und der zweiten Spreizstegen 114 mechanisch verunmöglicht ist. Im Bereich von Kopf 108 und Fuß 102 erfolgt ebenfalls kein Gleiten der beiden Komponenten aneinander.

Erst bei Eindringen des drehenden Befestigungselements 106 in die Stirnplatte 120 beginnt dann bei Verankerung in einem Hohlkörper ein Verknoten der zuvor radial aufgespreizten und dadurch voneinander beabstandeten ersten und zweiten Spreizstege 112, 114. In dieser Phase hat das Befestigungselement 106 das distale Ende des Kopfs 108 erreicht oder sogar durchdrungen. Wenn das Befestigungselement 106 also den Kopf 108 erreicht und sich in diesen eindreht, wird der Kopf 108 drehend in Richtung Fuß 102 gezogen. Dadurch verdrehen sich auch die Spreizstege 112, 114, ohne abzureißen und bilden daher um das Befestigungselement 106 herum einen Knoten. Ein resultierender Formschluss verhindert auch in einem als Hohlkörper ausgebildeten Untergrund 118 ein Herausziehen des Dübels 100.

Bei dem beschriebenen Ausführungsbeispiel ist der Spreizbereich 110 derart ausgebildet, dass ein Übergang zwischen dem gleitfreien radialen Aufweiten und dem Beginn des Verknotens erfolgt, wenn eine Aufweitung der ersten und zweiten Spreizstege 112, 114 um etwa 21,5 % ihres ursprünglichen Umfangs erfolgt ist. In diesem Zustand stehen die Spreizstege 112, 114 über ihre alternierend breiteren und schmäleren Abschnitte 140, 142 praktisch nicht mehr in Verzahnungseingriff miteinander. Die Konstruktion des dargestellten Dübels 100 ist so ausgelegt, dass der Dübel 100 durch das Befestigungselement 106 (insbesondere eine Schraube) im Umfang um 21,5 % aufzuweiten ist, damit die Spreizstege 112, 114 gegeneinander frei sind und eine axiale Verschiebbarkeit gegeben ist. In diesem Fall sind dann die Spreizstege 112, 114 komplett voneinander getrennt. In anderen Ausführungsbeispielen kann der genannte Prozentwert in einem Bereich zwischen 15% und 25% liegen.

**Figur 11** zeigt schematisch einen Dübel 100 gemäß einem exemplarischen Ausführungsbeispiel der Erfindung (zum Beispiel den in Figur 1 bis Figur 10 gezeigten Dübel 100), bei dem die Spreizstege 112, 114 in einem als Vollkörper ausgebildeten Untergrund 118 aufgespreizt sind.

Genauer gesagt stellt Figur 11 eine Montageanordnung 136 gemäß einem exemplarischen Ausführungsbeispiel der Erfindung dar, die einen als Vollkörper (zum Beispiel Vollbeton) ausgebildeten Untergrund 118 und ein Montagekit 134 gemäß einem exemplarischen Ausführungsbeispiel der Erfindung zeigen. Das Montagekit 134 enthält den bezugnehmend auf Figur 1 bis Figur 10 beschriebenen Dübel 100 und eine Metallschraube als Befestigungselement 106 zum Einführen in den Dübel 100.

Zum Montieren des Dübels 100 in den als Vollkörper ausgebildeten Untergrund 118 wird in den Untergrund 118 zunächst ein Sackloch gebohrt. Danach wird, beispielsweise händisch oder mittels eines nicht dargestellten Hammers, der Dübel 100 in das Sackloch eingeführt. Nachfolgend wird mittels eines Schraubendrehers 178 das als Schraube ausgebildete Befestigungselement 106 in die Öffnung 104 und dann in den Aufnahmekanal 130 des Dübels 100 eingeschraubt. Dadurch erfolgt ein vollumfängliches und in Umfangsrichtung lückenloses Aufspreizen der Spreizstege 112, 114 des Dübels 100 gegen die Wandung des Sacklochs. Wie oben beschrieben, sind die Spreizstege 112, 114 ausgebildet, bei Einführen des Befestigungselements 106 in den als Vollkörper ausgebildeten Untergrund 118 gemeinsam aufzuspreizen.

Durch das oben beschriebene Herstellungsverfahren bzw. die Eigenschaften des Dübels 100 verbleiben im Spreizbereich 110 keine Hohlräume ohne Kunststoff zwischen Spreizstegen 112, 114. Da sich solche Hohlräume auf das Spreizverhalten negativ auswirken, können mit dem beschriebenen Dübel 100 und dem zugehörigen Setzverfahren hohe Auszugskräfte erhalten werden. Gemäß Figur 11 werden der Dübel 100 und das Befestigungselement 106 verwendet, um ein Anbauteil 186 an dem Untergrund 118 zu montieren.

**Figur 12** zeigt denselben Dübel 100 wie gemäß Figur 11 in einem Betriebszustand, in dem die Spreizstege 112, 114 in einem als Hohlkörper ausgebildeten anderen Untergrund 118 verknotet sind. Wenn nämlich der Untergrund 118, in den der Dübel 100 gesetzt wird, ein Hohlkörper ist, verknoten die Spreizstege 112, 114 des Dübels 100 in einem Hohlraum 184 des Hohlkörpers. Im dargestellten Ausführungsbeispiel ist der Untergrund 118 aus einer Platte 182 (zum Beispiel aus Gips oder Holz) gebildet, hinter der ein Hohlraum 184 angeordnet ist.

Somit ist der Dübel 100 ausgebildet, bei Eindrehen des Befestigungselements 106 in den als Hohlkörper ausgebildeten Untergrund 118 die Spreizstege 112, 114 des eingeführten Dübel 100 miteinander zu verknoten, wenn die Spreizstege 112, 114 in den Hohlraum 184 hinter der Platte 186 eindringen.

Zusammenfassend zeigt Figur 12 das Ergebnis der Durchführung eines Verfahrens zum Montieren eines Dübels 100 gemäß Figur 1 bis Figur 10 in einem als Hohlkörper ausgebildeten Untergrund 118. Hierbei erfolgt zunächst ein Einführen des Dübels 100 in ein Bohrloch in dem Untergrund 118. Danach wird ein Befestigungselement 106 drehend in die Öffnung 104 eingeführt. Dadurch kommt es zunächst zu einem gleitfreien radialen Aufspreizen der ersten Spreizstege 112 und - davon unabhängig - der zweiten Spreizstege 114. Wird nachfolgend das drehende Einführen des Befestigungselements 106 in die Öffnung 104 bei einem als Hohlkörper ausgebildeten Untergrund 118 fortgesetzt, beginnen die radial aufgespreizten und dadurch voneinander beabstandeten ersten und zweiten Spreizstege 112, 114 miteinander zu verknoten, ohne dass die ersten und zweiten Spreizstege 112, 114 vom Kopf 108 abgetrennt werden.

Somit erfolgt ein Verknoten der ersten und zweiten Spreizstege 112, 114 zu einem Knäuel, wenn das Befestigungselement 106 drehend in den Kopf 108 eindringt und dadurch den Kopf 108 drehend in Richtung zu dem nicht mitdrehenden Fuß 102 zieht.

Der als Kunststoffdübel ausgebildete Dübel 100 gemäß Figur 1 bis Figur 10 ermöglicht somit wahlweise eine Verankerung durch Verspreizen in Vollbaustoffen (siehe Figur 11) und durch Verknoten in Hohlbaustoffen oder Plattenmaterialien (siehe Figur 12).

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Dübel (100), aufweisend:
einen Fuß (102) mit einer Öffnung (104) zum Einführen eines Befestigungselements (106);
einen Kopf (108); und
einen Spreizbereich (110) zwischen dem Fuß (102) und dem Kopf (108) mit einer Mehrzahl von in Umfangsrichtung alternierend und überlappungsfrei angeordneten und in Axialrichtung (191) zwischen Fuß (102) und Kopf (108) verlaufenden ersten Spreizstegen (112) und zweiten Spreizstegen (114), wobei die ersten Spreizstege (112) Teil einer ersten Spritzgusskomponente (170) des Dübels (100) sind und die zweiten Spreizstege (114) Teil einer zweiten Spritzgusskomponente (180) des Dübels (100) sind;
wobei die ersten Spreizstege (112) und die zweiten Spreizstege (114) jeweils in Axialrichtung (191) des Dübels (100) alternierend breitere Abschnitte (140) und schmälere Abschnitte (142) aufweisen, die miteinander zum mechanischen Verunmöglichen eines axialen Gleitens zwischen den ersten Spreizstegen (112) und den zweiten Spreizstegen (114) verzahnt sind;
wobei der Spreizbereich (110) so ausgebildet ist, dass bei Einführen eines Befestigungselements (106) in die Öffnung (104):
zunächst ein gleitfreies radiales Aufspreizen der ersten Spreizstege (112) und unabhängig davon der zweiten Spreizstege (114) erfolgt; und
erst danach die radial aufgespreizten und dadurch voneinander beabstandeten ersten Spreizstege (112) und zweiten Spreizstege (114) miteinander verknoten.

2. Dübel (100) gemäß Anspruch 1, wobei die miteinander verzahnten breiteren Abschnitte (140) der ersten Spreizstege (112) und der zweiten Spreizstege (114) aneinander anliegende Kanten (190) aufweisen, die senkrecht oder im Wesentlichen senkrecht zu einer Axialrichtung (191) des Dübels (100) verlaufen.

3. Dübel (100) gemäß Anspruch 1 oder 2, wobei die alternierenden breiteren Abschnitte (140) und schmäleren Abschnitte (142) der ersten Spreizstege (112) und der zweiten Spreizstege (114) im Wesentlichen rechteckförmige Zahnstrukturen (197) bilden.

4. Dübel (100) gemäß einem der Ansprüche 1 bis 3, wobei die alternierenden breiteren Abschnitte (140) und schmäleren Abschnitte (142) der ersten Spreizstege (112) und der zweiten Spreizstege (114), wenn diese in Eingriff miteinander stehen, miteinander einen Formschluss bilden, der eine Relativbewegung der ersten Spreizstege (112) und der zweiten Spreizstege (114) in Axialrichtung (191) des Dübels (100), insbesondere beim radialen Aufspreizen, unterbindet.

5. Dübel (100) gemäß einem der Ansprüche 1 bis 4, wobei in dem Spreizbereich (110) kein Material der ersten Spreizstege (112) und der zweiten Spreizstege (114) in Radialrichtung des Dübels (100), insbesondere berührend, übereinander liegt, sodass keine mantelseitige Berührfläche zwischen den ersten Spreizstegen (112) und den zweiten Spreizstegen (114) gebildet ist.

6. Dübel (100) gemäß einem der Ansprüche 1 bis 5, wobei die ersten Spreizstege (112) und die zweiten Spreizstege (114) so ausgebildet sind und relativ zueinander derart angeordnet sind, dass bei Einführen eines Befestigungselements (106) in die Öffnung (104) ein axiales Gleiten zwischen den ersten Spreizstegen (112) und den zweiten Spreizstegen (114) mechanisch verunmöglicht ist.

7. Dübel (100) gemäß einem der Ansprüche 1 bis 6, wobei die ersten Spreizstege (112) im Bereich des Kopfs (108) und/oder im Bereich des Fußes (102) durch Material der ersten Spritzgusskomponente (170) miteinander einstückig verbunden sind, insbesondere mittels mindestens einer geschlossenen Ringstruktur (161, 163) der ersten Spritzgusskomponente (170).

8. Dübel (100) gemäß einem der Ansprüche 1 bis 7, wobei die zweiten Spreizstege (114) im Bereich des Kopfs (108) und/oder im Bereich des Fußes (102) durch Material der zweiten Spritzgusskomponente (180) miteinander einstückig verbunden sind, insbesondere mittels mindestens einer geschlossenen Ringstruktur (165, 167) der zweiten Spritzgusskomponente (180).

9. Dübel (100) gemäß einem der Ansprüche 1 bis 8, aufweisend zumindest eines der folgenden Merkmale:
wobei im Bereich des Kopfs (108) und/oder im Bereich des Fußes (102) Material der ersten Spritzgusskomponente (170) und Material der zweiten Spritzgusskomponente (180) miteinander formschlüssig verbunden ist, insbesondere mittels mindestens eines Überstands (192) der ersten Spritzgusskomponente (170) in Eingriff mit mindestens einer Aussparung (193) der zweiten Spritzgusskomponente (180);
wobei der Spreizbereich (110) so ausgebildet ist, dass bei dem Einführen eines Befestigungselements (106) in die Öffnung (104) zunächst ein ausschließlich radiales Aufspreizen der ersten Spreizstege (112) und der zweiten Spreizstege (114) ohne axiale Relativbewegung der ersten Spreizstege (112) und der zweiten Spreizstege (112, 114) zueinander erfolgt;
wobei der Spreizbereich (110) so ausgebildet ist, dass ein Übergang zwischen dem gleitfreien radialen Aufspreizen und dem Beginn des Verknotens dann erfolgt, wenn eine Aufweitung der ersten Spreizstege (112) und der zweiten Spreizstege (114) in einem Bereich zwischen 15 % und 25 % eines Umfangs des Spreizbereichs (110) erfolgt ist, sodass die breiteren Abschnitte (140) und die schmäleren Abschnitte (142) nicht mehr in Eingriff miteinander stehen;
wobei eine Axialverschiebung zwischen der ersten Spritzgusskomponente (170) einerseits und der zweiten Spritzgusskomponente (180) andererseits mechanisch verunmöglicht ist, insbesondere mittels der miteinander in Eingriff stehenden breiteren Abschnitte (140) und schmäleren Abschnitte (142);
wobei eine tangentiale Länge der schmäleren Abschnitte (142) der ersten Spreizstege (112) und/oder der zweiten Spreizstege (114) geringer ist als eine radiale Dicke der ersten Spreizstege (112) und/oder der zweiten Spreizstege (114);
wobei die erste Spritzgusskomponente (170) im Spreizbereich (110) in Umfangsrichtung eine Gitterstruktur mit einer Mehrzahl von Durchgangsschlitzen (194) zwischen benachbarten ersten Spreizstegen (112) hat, wobei insbesondere die Durchgangsschlitze (194) nur durch Punktkontakte (195) zum Verbinden benachbarter erster Spreizstege (112) unterbrochen sind;
wobei die zweite Spritzgusskomponente (180) im Spreizbereich (110) in Umfangsrichtung eine Gitterstruktur mit einer Mehrzahl von, insbesondere ununterbrochenen, Durchgangsschlitzen (196) zwischen benachbarten zweiten Spreizstegen (114) hat;
wobei jeder der ersten Spreizstege (112) und jeder der zweiten Spreizstege (114) unabhängig von den verbleibenden Spreizstegen (112, 114) bewegbar ist;
wobei die ersten Spreizstege (112) und die zweiten Spreizstege (114) gemeinsam einen im Umfangsrichtung im Wesentlichen geschlossenen Spreizbereich (110) bilden;
wobei in der Axialrichtung (191) Ränder der alternierend breiteren Abschnitte (140) und schmäleren Abschnitte (142) der ersten Spreizstege (112) und der zweiten Spreizstege (114) sich zumindest abschnittsweise im Wesentlichen gemäß einer periodischen Rechteckfunktion erstrecken, insbesondere entlang mindestens zwei oder mindestens drei Perioden.

10. Montagekit (134), aufweisend:
einen Dübel (100) gemäß einem der Ansprüche 1 bis 9; und
ein Befestigungselement (106) zum Einführen in den Dübel (100).

11. Montagekit (134) gemäß Anspruch 10, wobei ein Außendurchmesser des Befestigungselements (106) größer als ein Innendurchmesser des Dübels (100) ist.

12. Montageanordnung (136), aufweisend:
ein Montagekit (134) gemäß Anspruch 10 oder 11; und
einen Untergrund (118);
wobei der Dübel (100) in den Untergrund (118) eingeführt ist und das Befestigungselement (106) in den Dübel (100) eingeführt ist.

13. Montageanordnung (136) nach Anspruch 12, aufweisend zumindest eines der folgenden Merkmale:
wobei die ersten Spreizstege (112) und die zweiten Spreizstege (114) des Dübels (100) vollumfänglich aufgespreizt sind und der Untergrund (118) ein Vollkörper ist;
wobei die ersten Spreizstege (112) und die zweiten Spreizstege (114) des Dübels (100) in einem Hohlraum (184) des als Hohlkörper ausgebildeten Untergrunds (118) miteinander verknotet sind.

14. Verfahren zum Montieren eines Dübels (100) gemäß einem der Ansprüche 1 bis 9 in einem als Hohlkörper ausgebildeten Untergrund (118), wobei das Verfahren aufweist:
Einführen des Dübels (100) in ein Bohrloch in dem Untergrund (118);
Einführen eines Befestigungselements (106) in die Öffnung (104) des Dübels (100) derart, dass zunächst ein gleitfreies radiales Aufspreizen der ersten Spreizstege (112) und unabhängig davon der zweiten Spreizstege (114) erfolgt; und
nachfolgend Fortsetzen des Einführens des Befestigungselements (106) in die Öffnung (104) derart, dass erst nach dem gleitfreien radialen Aufspreizen die radial aufgespreizten und dadurch voneinander beabstandeten ersten Spreizstege (112) und zweiten Spreizstege (114) miteinander verknotet werden.

15. Verfahren gemäß Anspruch 14, wobei das Verfahren ein Verknoten der ersten Spreizstege (114) und der zweiten Spreizstege (114) miteinander aufweist, erst wenn das Befestigungselement (106) drehend in den Kopf (108) eindringt und dadurch den Kopf (108) drehend in Richtung Fuß (102) zieht, ohne dass die ersten Spreizstege (112) und die zweiten Spreizstege (114) vom Kopf (108) abgetrennt werden.

## Claims

1. A wall plug (100), comprising:
a foot (102) with an opening (104) for inserting a fixing element (106);
a head (108); and
a strutting region (110) between the foot (102) and the head (108) with a plurality of first strutting bars (112) and second strutting bars (114) being arranged in a circumferential direction alternatingly and overlap-free and running in an axial direction (191) between foot (102) and head (108), wherein the first strutting bars (112) are part of a first injection molding component (170) of the wall plug (100) and the second strutting bars (114) are part of second injection molding component (180) of the wall plug (100);
wherein the first strutting bars (112) and the second strutting bars (114) each comprise in an axial direction (191) of the wall plug (100) in an alternating manner broader sections (140) and narrower sections (142), which are teethed with one another between the first strutting bars (112) and the second strutting bars (114) for mechanically disabling an axial gliding;
wherein the strutting region (110) is formed in such a way that upon insertion of a fixing element (106) into the opening (104):
first a glide-free radial strutting of the first strutting bars (112) and, independently from that, of the second strutting bars (114) occurs; and
only afterwards the radially strutted and thereby spaced from each other first strutting bars (112) and second strutting bars (114) form knots with each other.

2. The wall plug (100) according to claim 1, wherein the knotted broader sections (140) of the first strutting bars (112) and the second strutting bars (114) comprise abutting edges (190), which run perpendicularly or substantially perpendicularly to an axial direction (191) of the wall plug (100).

3. The wall plug (100) according to claim 1 or 2, wherein the alternating broader sections (140) and narrower sections (142) of the first strutting bars (112) and the second strutting bars (114) form substantially rectangularly shaped tooth structures (197).

4. The wall plug (100) according to one of the claims 1 to 3, wherein the alternating broader sections (140) and narrower sections (142) of the first strutting bars (112) and the second strutting bars (114), when they are engaged with each other, form a form closure with each other, which disables a relative movement of the first strutting bars (112) and the second strutting bars (114) in an axial direction (191) of the wall plug (100), in particular during radial strutti ng.

5. The wall plug (100) according to one of the claims 1 to 4, wherein in the strutting region (110) no material of the first strutting bars (112) and the second strutting bars (114) overlaps, in particular in a contacting manner, in a radial direction of the wall plug (100), so that no jacket sided contact surface is formed between the first strutting bars (112) and the second strutting bars (114).

6. The wall plug (100) according to one of the claims 1 to 5, wherein the first strutting bars (112) and the second strutting bars (114) are formed in such a way and are arranged relative to each other that upon insertion of a fixing element (106) into the opening (104) an axial gliding between the first strutting bars (112) and the second strutting bars (114) is mechanically disabled.

7. The wall plug (100) according to one of the claims 1 to 6, wherein the first strutting bars (112) are integrally connected with each other in the region of the head (108) and/or in the region of the foot (102) by material of the first injection molding component (170), in particular by means of at least one closed ring structure (161, 163) of the first injection molding component (170).

8. The wall plug (100) according to one of the claims 1 to 7, wherein the second strutting bars (112) are integrally connected with each other in the region of the head (108) and/or in the region of the foot (102) by material of the second injection molding component (180), in particular by means of at least one closed ring structure (165, 167) of the second injection molding component (180).

9. The wall plug (100) according to one of the claims 1 to 8, comprising at least one of the following features:
wherein in the region of the head (108) and/or in the region of the foot (102) material of the first injection molding component (170) and material of the second injection molding component (180) is connected with each other in a form closed manner, in particular by means of at least one protrusion (192) of the first injection molding component (170) engaged with at least one recess (193) of the second injection molding component (180);
wherein the strutting region (110) is formed in such a way that upon insertion of a fixing element (106) into the opening (104) first an exclusively radial strutting of the first strutting bars (112) and the second strutting bars (114) without axial relative movement of the first strutting bars (112) and the second strutting bars (114) relative to each other occurs;
wherein the strutting region (110) is formed in such a way that a transition between the glide-free radial strutting and the beginning of the knotting occurs when an expansion of the first strutting bars (112) and the second strutting bars (114) in a range between 15 % and 25 % of a circumference of the strutting region (110) has occurred, so that the broader sections (140) and the narrower sections (142) are not engaged with each other anymore;
wherein an axial displacement between the first injection molding component (170) on the one hand and the second injection molding component (180) on the other hand is disabled mechanically, in particular by means of the broader sections (140) and the narrower sections (142), which are engaged with each other;
wherein a tangential length of the narrower sections (142) of the first strutting bars (112) and/or the second strutting bars (114) is less then a radial thickness of the first strutting bars (112) and/or the second strutting bars (114);
wherein the first injection molding component (170) has, in the strutting region (110) in the circumferential direction, a mesh structure with a plurality of through slots (194) between neighboring first strutting bars (112), wherein in particular the through slots (194) are only intermitted by point contacts (195) for connecting neighboring first strutting bars (112);
wherein the second injection molding component (180) has, in the strutting region (110) in the circumferential direction, a mesh structure with a plurality of, in particular continuous, through slots (196) between neighboring second strutting bars (114);
wherein each of the first strutting bars (112) and each of the second strutting bars (114) is movable independently of the remaining strutting bars (112, 114);
wherein the first strutting bars (112) and the second strutting bars (114) form together a strutting region (110) substantially closed in a circumferential direction;
wherein in the axial direction (191) edges of the alternating broader sections (140) and narrower sections (142) of the first strutting bars (112) and the second strutting bars (114) extend at least in sections substantially according to a periodic rectangle function, in particular along at least two or at least three periods.

10. Mounting kit (134), comprising:
a wall plug (100) according to one of the claims 1 to 9; and
a fixing element (106) for inserting into the wall plug (100).

11. Mounting kit (134) according to claim 10, wherein an outer diameter of the fixing element (106) is larger than an inner diameter of the wall plug (100).

12. Mounting arrangement (136), comprising:
a mounting kit (134) according to claim 10 or 11; and
a substrate (118);
wherein the wall plug (100) is inserted into the substrate (118) and the fixing element (106) is inserted into the wall plug (100).

13. Mounting arrangement (136) according to claim 12, comprising at least one of the following features:
wherein the first strutting bars (112) and the second strutting bars (114) of the wall plug (100) are strutted along the full circumference and the substrate (118) is a solid body;
wherein the first strutting bars (112) and the second strutting bars (114) of the wall plug (100) are knotted with each other in a hollow space (184) of the substrate (118) formed as a hollow body.

14. A method for mounting a wall plug (100) according to one of the claims 1 to 9 in a substrate (118) formed as a hollow body, the method comprising:
inserting the wall plug (100) into a drilling hole in the substrate (118);
inserting the fixing element (106) into the opening (104) of the wall plug (100) in such a way, that first a glide-free radial strutting of the first strutting bars (112) and, independently from that, of the second strutting bars (114) occurs; and
subsequently continuing to insert the fixing element (106) in the opening (104) in such a way, that only after the glide-free radial strutting the radially strutted and thereby spaced from each other first strutting bars (112) and second strutting bars (114) are knotted with each other.

15. The method according to claim 14, wherein the method comprises a knotting of the first strutting bars (112) and the second strutting bars (114), only when the fixing element (106) rotatingly penetrates the head (108) and thereby rotatingly pulls the head (108) into the direction of the foot (102), without the first strutting bars (112) and the second strutting bars (114) being separated from the head (108).

## Revendications

1. Cheville (100), comprenant :
un pied (102) ayant une ouverture (104) pour l'insertion d'un élément de fixation (106) ;
une tête (108) ; et
une zone expansible (110) située entre le pied (102) et la tête (108), comportant une pluralité de premières nervures expansibles (112) et de deuxièmes nervures expansibles (114) disposées alternativement dans la direction circonférentielle et sans chevauchement et s'étendant dans la direction axiale (191) entre le pied (102) et la tête (108), les premières nervures expansibles (112) faisant partie d'un premier composant (170) de la cheville (100) moulé par injection et les deuxièmes nervures expansibles (114) faisant partie d'un deuxième composant (180) de la cheville (100) moulé par injection ;
les premières nervures expansibles (112) et les deuxièmes nervures expansibles (114) présentant chacune en alternance des parties plus larges (140) et des parties plus étroites (142) dans la direction axiale (191) de la cheville (100), qui sont emboîtées les unes dans les autres pour empêcher mécaniquement un glissement axial entre les premières nervures expansibles (112) et les deuxièmes nervures expansibles (114) ;
la zone expansible (110) étant formée de telle sorte que, lorsqu'un élément de fixation (106) est inséré dans l'ouverture (104) :
Il y a tout d'abord un écartement radial sans glissement des premières nervures expansibles (112) et, indépendamment, des deuxièmes nervures expansibles (114) ; et
ce n'est qu'ensuite que les premières nervures expansibles (112) et les deuxièmes nervures expansibles (114), écartées radialement et ainsi espacées, sont liées les unes aux autres.

2. Cheville (100) selon la revendication 1, dans laquelle les parties plus larges (140) emboîtées les unes dans les autres des premières nervures expansibles (112) et des deuxièmes nervures expansibles (114) présentent des bords (190) adjacents les uns aux autres qui s'étendent perpendiculairement ou sensiblement perpendiculairement à une direction axiale (191) de la cheville (100).

3. Cheville (100) selon la revendication 1 ou la revendication 2, dans laquelle les parties plus larges (140) et les parties plus étroites (142) alternées des premières nervures expansibles (112) et des deuxièmes nervures expansibles (114) forment des structures de dents (197) sensiblement rectangulaires.

4. Cheville (100) selon l'une des revendications 1 à 3, dans laquelle les parties plus larges (140) et les parties plus étroites (142) alternées des premières nervures expansibles (112) et des deuxièmes nervures expansibles (114), lorsque celles-ci sont en prise les unes avec les autres, forment une liaison par complémentarité de forme entre elles qui empêche un mouvement relatif des premières nervures expansibles (112) et des deuxièmes nervures expansibles (114) dans la direction axiale (191) de la cheville (100), en particulier lors de l'écartement radial.

5. Cheville (100) selon l'une des revendications 1 à 4, dans laquelle, dans la zone expansible (110), aucune matière des premières nervures expansibles (112) et des deuxièmes nervures expansibles (114) ne se superpose dans la direction radiale de la cheville (100), en particulier de manière touchante, de sorte qu'il ne se forme aucune surface de contact côté enveloppe entre les premières nervures expansibles (112) et les deuxièmes nervures expansibles (114).

6. Cheville (100) selon l'une des revendications 1 à 5, dans laquelle les premières nervures expansibles (112) et les deuxièmes nervures expansibles (114) sont conçues et disposées les unes par rapport aux autres de telle sorte que, lorsqu'un élément de fixation (106) est inséré dans l'ouverture (104), un glissement axial entre les premières nervures expansibles (112) et les deuxièmes nervures expansibles (114) est mécaniquement impossible.

7. Cheville (100) selon l'une des revendications 1 à 6, dans laquelle les premières nervures expansibles (112) sont reliées entre elles d'un seul tenant dans la zone de la tête (108) et/ou dans la zone du pied (102) par la matière du premier composant (170) moulé par injection, en particulier par au moins une structure annulaire fermée (161, 163) du premier composant (170) moulé par injection.

8. Cheville (100) selon l'une des revendications 1 à 7, dans laquelle les deuxièmes nervures expansibles (114) sont reliées entre elles d'un seul tenant dans la zone de la tête (108) et/ou dans la zone du pied (102) par la matière du deuxième composant (180) moulé par injection, en particulier par au moins une structure annulaire fermée (165, 167) du deuxième composant (180) moulé par injection.

9. Cheville (100) selon l'une des revendications 1 à 8, présentant au moins l'une des caractéristiques suivantes :
dans la zone de la tête (108) et/ou dans la zone du pied (102), la matière du premier composant (170) moulé par injection et la matière du deuxième composant (180) moulé par injection sont reliées entre elles par coopération de formes, en particulier au moyen de la venue en engagement d'au moins une saillie (192) du premier composant (170) moulé par injection avec au moins un évidement (193) de la deuxième composant (180) moulé par injection ;
la zone expansible (110) est conçue de telle sorte que, lorsqu'un élément de fixation (106) est inséré dans l'ouverture (104), les premières nervures expansibles (112) et les deuxièmes nervures expansibles (114) sont d'abord expansées exclusivement radialement sans mouvement relatif axial des premières nervures expansibles (112) et des deuxièmes nervures expansibles (112, 114) les unes par rapport aux autres ;
la zone expansible (110) est formée de telle sorte qu'une transition entre l'écartement radial sans glissement et le début de la liaison se produit lorsqu'une expansion des premières nervures expansibles (112) et des deuxièmes nervures expansibles (114) s'est produit dans une gamme comprise entre 15 % et 25 % d'une circonférence de la zone expansible (110), de sorte que les parties plus larges (140) et les parties plus étroites (142) ne soient plus en engagement les unes avec les autres ;
un déplacement axial entre le premier composant (170) moulé par injection d'une part et le deuxième composant (180) moulé par injection d'autre part est mécaniquement impossible, notamment grâce aux parties plus larges (140) et aux parties plus étroites (142) en engagement les unes avec les autres ;
une longueur tangentielle des parties plus étroites (142) des premières nervures expansibles (112) et/ou des deuxièmes nervures expansibles (114) est inférieure à une épaisseur radiale des premières nervures expansibles (112) et/ou des deuxièmes nervures expansibles (114) ;
le premier composant (170) moulé par injection présente dans la zone expansible (110) une structure en treillis dans la direction circonférentielle avec une pluralité de fentes traversantes (194) entre des premières nervures expansibles (112) adjacentes, les fentes traversantes (194) n'étant en particulier interrompues que par des parties de contact ponctuelles (195) pour relier des premières nervures expansibles (112) adjacentes ;
le deuxième composant (180) moulé par injection présente dans la zone expansible (110) une structure en treillis dans la direction circonférentielle avec une pluralité de fentes traversantes (196), en particulier ininterrompues, entre des deuxièmes nervures expansibles (114) adjacentes ;
chacune des premières nervures expansibles (112) et chacune des deuxièmes nervures expansibles (114) est mobile indépendamment des autres nervures expansibles (112, 114) ;
lesdites premières nervures expansibles (112) et lesdites deuxièmes nervures expansibles (114) forment ensemble une zone expansible (110) sensiblement fermée dans la direction circonférentielle ;
dans la direction axiale (191), les bords des parties alternativement plus larges (140) et des parties plus étroites (142) des premières nervures expansibles (112) et des deuxièmes nervures expansibles (114) s'étendent au moins partiellement sensiblement selon une fonction rectangulaire périodique, en particulier selon au moins deux ou au moins trois périodes.

10. Kit de montage (134), comprenant :
une cheville (100) selon l'une des revendications 1 à 9 ; et
un élément de fixation (106) pour une insertion dans la cheville (100).

11. Kit de montage (134) selon la revendication 10, dans lequel un diamètre extérieur de l'élément de fixation (106) est supérieur à un diamètre intérieur de la cheville (100).

12. Ensemble de montage (136) comprenant :
un kit de montage (134) selon la revendication 10 ou la revendication 11 ; et
un substrat (118) ;
la cheville (100) étant insérée dans le substrat (118) et l'élément de fixation (106) étant inséré dans la cheville (100).

13. Ensemble de montage (136) selon la revendication 12, comprenant au moins une des caractéristiques suivantes :
les premières nervures expansibles (112) et les deuxièmes nervures expansibles (114) de la cheville (100) sont entièrement déployées et le substrat (118) est un corps plein ;
les premières nervures expansibles (112) et les deuxièmes nervures expansibles (114) de la cheville (100) sont liées ensemble dans une cavité (184) du substrat (118) qui est formé en tant que corps creux.

14. Procédé de montage d'une cheville (100) selon l'une des revendications 1 à 9 dans un substrat (118) formé en tant que corps creux, le procédé comprenant :
le fait d'insérer la cheville (100) dans un trou percé dans le substrat (118) ;
le fait d'introduire un élément de fixation (106) dans l'ouverture (104) de la cheville (100) de telle sorte que les premières nervures expansibles (112) et, indépendamment de celles-ci, les deuxièmes nervures expansibles (114) soient d'abord expansées radialement sans glissement ; et
le fait de poursuivre ensuite l'insertion de l'élément de fixation (106) dans l'ouverture (104) de telle sorte que ce n'est qu'après l'écartement radial sans glissement que les premières nervures expansibles (112) et les deuxièmes nervures expansibles (114) sont liées ensemble et ainsi écartées.

15. Procédé selon la revendication 14, dans lequel le procédé comprend le fait de lier par nouage les premières nervures expansibles (112) et les deuxièmes nervures expansibles (114) les unes aux autres seulement lorsque l'élément de fixation (106) pénètre de manière rotative dans la tête (108) et qu'il tire ainsi de manière rotative la tête (108) en direction du pied (102) sans que les premières nervures expansibles (112) et les deuxièmes nervures expansibles (114) soient séparées de la tête (108).
